(19) Europäisches Patentamt

European Patent Office

Office européen des brevets

(11) EP 2 677 384 B1

(12) **EUROPEAN PATENT SPECIFICATION**

(45) Date of publication and mention
of the grant of the patent:
**22.08.2018 Bulletin 2018/34**

(21) Application number: **13172532.7**

(22) Date of filing: **18.06.2013**

(51) Int Cl.:
***G05D 1/00*** *(2006.01)*

(54) **Remote control of an autonomous vehicle**

Fernsteuerung eines autonomen Fahrzeugs

Télécommande d'un véhicule autonome

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2012 JP 2012138051**

(43) Date of publication of application:
**25.12.2013 Bulletin 2013/52**

(73) Proprietor: **Ricoh Company, Ltd.
Tokyo 143-8555 (JP)**

(72) Inventor: **YAMAMOTO, Shoji
Atsugi-shi, Kanagawa 243-0298 (JP)**

(74) Representative: **J A Kemp
14 South Square
Gray's Inn
London WC1R 5JJ (GB)**

(56) References cited:
**WO-A2-2007/041295    US-A1- 2005 215 171**

**Description**

The present invention relates to a navigation system to remotely operate an autonomous vehicle which has a self-drive system while monitoring the driving situation thereof. In particular, it relates to a navigation system to operate an autonomous vehicle relating to destinations, driving positions, driving status, recognition of carrying objects, status notification, or remote control. This system captures an image of a line marking on a floor surface with a camera and detects the relative position and posture of the line marking to the camera by image recognition to control the autonomous vehicle on the basis of the detected position and posture to drive along the line marking.

Japanese Patent Application Publication No. 2001-202130 (Reference 1) and No. 2002-4115 (Reference 2) disclose a remote monitoring system to establish wireless communication between a single CPU and automatic guided vehicles and check driving information about the automatic guided vehicles such as driving positions and status with the CPU. Further, Japanese Patent No. 3235264 (Reference 3) discloses an automatic driving system including calling devices at stop points of an automatic guided vehicle preset along a guided driving route, to call out the automatic guided vehicle to an operator's position. One calling device is provided at each stop point.

WO 2007/041295 discloses a mobile robot guest for interacting with a human resident. The robot performs a room-traversing search procedure prior to interacting with the resident.

The inventor of the present invention proposed an autonomous vehicle driving system (disclosed in Japanese Patent Application Publication No. 2009-251922; Reference 4) in which a driving route can be easily set or changed and of which maintenance and management are easy. In this system an autonomous vehicle having a self-driving system captures an image of a line marking (vinyl tape) on a road ahead of the vehicle with a camera, and the position and posture of the line marking are detected through image processing to automatically control the self-driving system to drive along the line marking. Code signs are attached on the line marking and also captured to detect identification codes which represent driving points and bifurcations on a driving route. The system automatically operates the self-driving system in accordance with a driving instruction added to a detected identification code, referring to a drive plan containing a group of spot information which is driving instructions with the identification codes. It is preferable for this system that an operator can remotely monitor and operate the driving information about the autonomous vehicle.

With the systems disclosed in References 1 and 2, an operator needs to go to the place in which the CPU is disposed to check the driving position and status of the automatic guided vehicle. The operator cannot check them from anywhere he/she desires. Moreover, the operator cannot selectively acquire desired driving information alone among various types of information such as destination, driving position or status, carrying objects, and anomaly of the vehicle.

With the system disclosed in Reference 3 it is not possible to call out the automatic guided vehicle to an arbitrary position or stop point from an arbitrary calling device, and perform the vehicle callout while checking the current positions of all the automatic guided vehicles. Further, the calling devices and automatic guided vehicles are connected via a dedicated wireless LAN (Local Area Network), which takes a larger amount of costs and imposes a large load for installing the system or relocating it with a change in layout. Particularly, in the system disclosed in Reference 4 an operator inputs a destination to a personal computer (PC) mounted in the autonomous vehicle so that it is not possible to call out the automatic guided vehicle to an arbitrary position or stop point from an arbitrary calling device, and perform the vehicle callout while checking the current positions of all the automatic guided vehicles, either.

A first object of the present invention is to provide an automatic drive navigation system which can check driving information about an autonomous vehicle from anywhere, free from positional restrictions. A second object thereof is to provide an automatic drive navigation system in which only a desired item of driving information can be set to be notified to an operator. A third object thereof is to provide an automatic drive navigation system in which a notifier for the operator can be set. A fourth object thereof is to provide an automatic drive navigation system in which each of autonomous vehicles concurrently driving are remotely operable. A fifth object thereof is to provide an automatic drive navigation system which can be introduced with a low cost, has a great affinity for a PC, and operates in LAN environment.

The present invention provides an automatic drive navigation system as defined in the appended claims.

Features, embodiments, and advantages of the present invention will become apparent from the following detailed description with reference to the accompanying drawings:

FIG. 1 is a schematic block diagram of an automatic drive navigation system according to one embodiment of the present invention by way of example;
FIG. 2 is a schematic block diagram of an autonomous vehicle navigated by the automatic drive navigation system by way of example;
FIGs. 3A to 3C are plan views of a frame of an image captured with a camera 4 in FIG. 1, the image in FIG. 3A after profile extraction, and features extracted from the image, respectively;
FIGs. 4A to 4C are plan views of the profile of an image of a tape extracted from the image captured with the camera 4 in FIG. 2, the position of the tape image in the frame when an autonomous vehicle AGV-001 oversteers, and code signs added on a black vinyl tape 1 as line marking, respectively;

FIG. 5 is a block diagram showing the software names and functions of a server PC 31, a navigation PC 32, and an on-vehicle PC 9 in FIG. 1;

FIG. 6 is a block diagram showing software downloaded onto the navigation PC 32 and on-vehicle PC 9 from the server PC 31;

FIG. 7 shows the items of driving information about a subject of navigation of the drive system in FIG. 1;

FIG. 8 shows a table (Excel) of the names of carried objects assigned to input keys of the on-vehicle PC 9 in FIG. 1;

FIGs. 9A to 9D show screen displays on the on-vehicle PC 9 in FIG. 1;

FIG. 10A shows route action data (driving command data) of a drive plan stored in the server PC 31, FIG. 10B shows the meanings of the codes in FIG. 10A, and FIG. 10C shows the commands represented by the action data;

FIG. 11A shows a navigation screen of the display of the navigation PC 32 in FIG. 1 and FIG. 11B shows XY coordinates of addresses on the navigation screen;

FIG. 12 is a function block diagram of the operation of the navigation PC 32 associated with the action of the server PC 31 in FIG. 2 when an event occurs;

FIGs. 13A to 13D show an event table (Excel) of the server PC 31 in FIG. 1, an event condition table, an action table, and an EMAIL environment data table (Excel), respectively;

FIG. 14 is a function block diagram of the operation of an operator to the navigation PC 32 in FIG. 1, a shared folder generated by the server PC 31, and a folder reference operation of the on-vehicle PC 9;

FIG. 15A shows the contents of data in the shared folder generated by the server PC in FIG. 1 and FIG. 15B shows images on the display of the navigation PC 32 in FIG. 1 when the operator remotely operates the autonomous vehicle AGV-001 with the navigation PC 32;

FIG. 16 is a flowchart for the autonomous vehicle's starting driving in response to the on-vehicle PC 9's access to the server PC 31 immediately after power-on and an operator's input to the on-vehicle PC 9 in FIG. 2;

FIG. 17 is a flowchart for automatic steering control by the on-vehicle PC 9 based on acquired camera images during driving and image analysis;

FIG. 18 is a flowchart for code sign (bit 0 to 5 in FIG. 4C) analysis process by the on-vehicle PC 9 immediately after an address mark is detected from a camera image during driving;

FIG. 19 is a flowchart for automatic stop control based on the codes acquired by the code sign analysis on the on-vehicle PC 9;

FIG. 20 is a flowchart for driving command receiving process of the on-vehicle PC 9 from the server PC 31;

FIG. 21 is a flowchart for navigation display update process of the navigation PC 32;

FIG. 22 is a flowchart for notifying process of the navigation PC 32 to a rotary beacon light or a beeper 33 in FIG. 12;

FIG. 23 is a flowchart for setting a driving command to the autonomous vehicle on the server PC 31 by an operator's input to the navigation PC 32;

FIG. 24 is a flowchart for update process of stop time data about the autonomous vehicle on the server PC 31;

FIG. 25 is a flowchart for notifying process of the server PC 31;

FIG. 26 is a function block diagram of the configuration of intersection control; and

FIG. 27 is a flowchart for the intersection control by the server PC 31.

According to one embodiment of the present invention, the driving state of an autonomous vehicle AGV is notified to a navigation PC 32 as a navigation terminal, referring to an event table, if the driving state matches a condition set in the event table. This achieves the following effects:

The operator does not need to constantly pay attention to the navigation display of the navigation PC 32;

The operator can know only desired notification conditions such as arrival at designated station and occurrence of specified errors;

By issuing a pre-arrival audio notification, for example, when the vehicle comes at an address one before the station, workers can perform preparatory work in advance and process main operation efficiently;

A loss of time resulting from overlooking the arrival of a vehicle at station or occurrence of errors can be reduced;

The operator can concurrently select one or more of a rotary beacon light or a beeper, and an e-mail for an audio notifier in accordance with an operator' s use environment;

Necessary condition for event notification is merely to install a navigation application on a personal computer, therefore, the system is easy to introduce; and

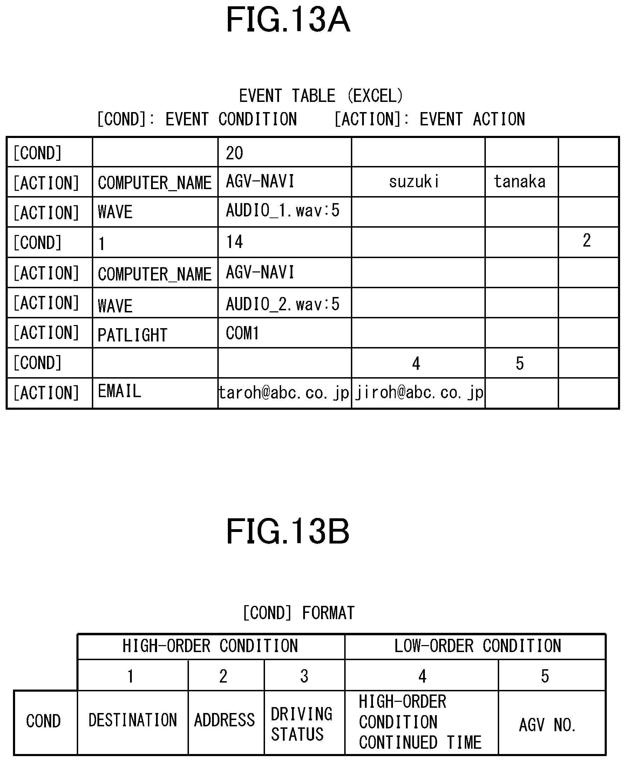

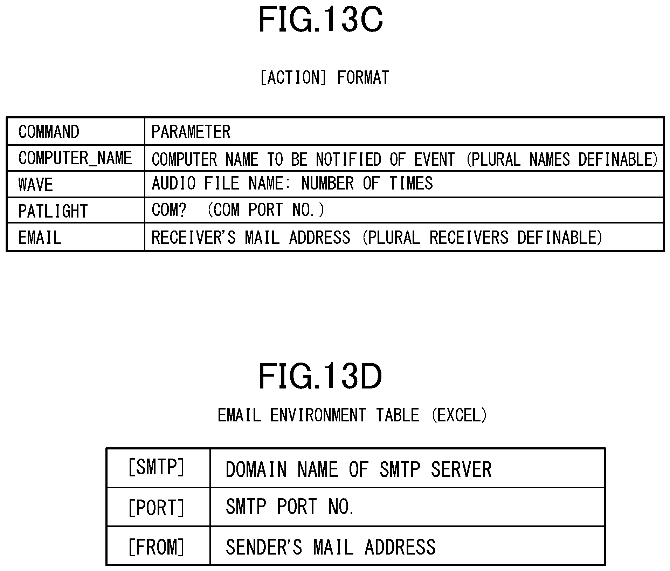

Events can be defined by [COND] and [ACTION] so that in terms of addition of conditions and actions, the system is highly scalable. As shown in FIG. 13B, [COND] is comprised of high-order conditions 1 to 3 and low-order condition 4 and 5. When the high-order conditions 1 to 3 are all true and the low-order conditions 4 and 5 are true, an event action defined in [ACTION] is executed. In FIG. 13B AGB-XXX represents three-digit No. of the vehicle and the number takes 001 from 200.

The operator can designate the destination of each autonomous vehicle while viewing the driving information about all the autonomous vehicles on the navigation PC, so that he/she can send an arbitrary autonomous vehicle to an arbitrary station in accordance with the operation status of all the autonomous vehicles. Specifically, the operator can know which of the autonomous vehicles is idling without carrying an object or which of the autonomous vehicles is closest to a desired station, and can select an optimal autonomous vehicle and remotely control it. The navigation PC 32 as a calling system can be any PC located anywhere to remotely control the autonomous vehicles as long as it is connected via a LAN since it is achievable by an application operating on a PC. It is free from positional restrictions. It is unnecessary to set the navigation PC at every station and it can be placed anywhere in a LAN area. Further, a single navigation PC can remotely control all the autonomous vehicles.

The driving information is arranged in a row on the display of the navigation PC 32. The navigation application operates on the PC so that any PC connected with IEEE802.11 or wired LAN can monitor the autonomous vehicles only if the navigation application is downloaded thereon.

Further, since the LAN is in compliance with the TCP/IP or IEEE802.11, introduction costs are low, and it has affinity for PCs. Also, the degree of freedom where the automatic drive navigation system is installed is high, and in changing a layout, it requires less labor and time to relocate communication facilities and devices.

Hereinafter, embodiments of the present invention will be described in detail with reference to the accompanying drawings. Wherever possible, the same reference numbers will be used throughout the drawings to refer to the same or like parts.

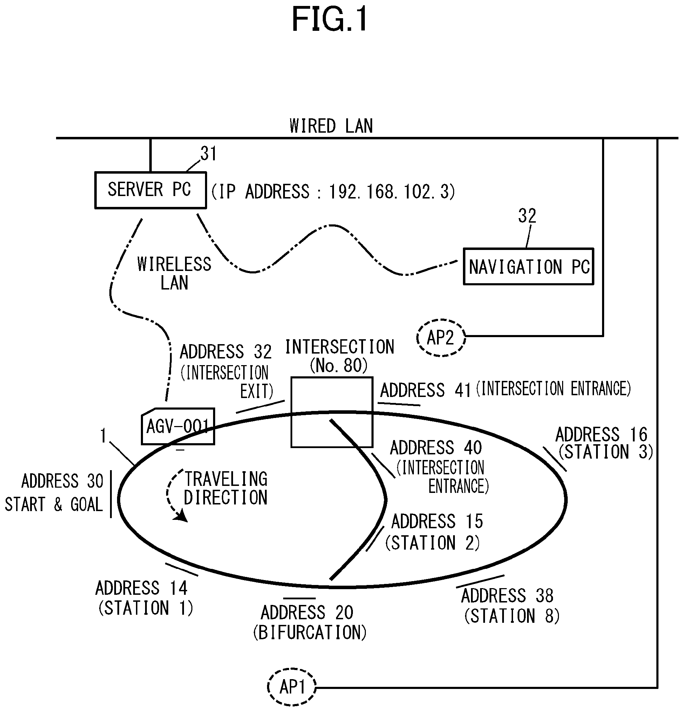

FIG. 1 shows an example of the automatic drive navigation system according to one embodiment. In the drawing a driving route is indicated by attaching a black vinyl tape 1 onto a floor surface, a start and goal point is set to an address 30 and an autonomous vehicle drives counterclockwise. In the driving direction addresses and station numbers are assigned to the inlets of a leading wire and the loading and unloading points of packages, and addresses are assigned to bifurcations and the entrances and exits of intersections. Code signs indicating identification codes of the addresses are provided by adhesion of the black vinyl tape on the addressed points (square block) of the floor surface. In this driving route autonomous vehicles AGV-001 to AGV-003 with the same structure and function are concurrently driven.

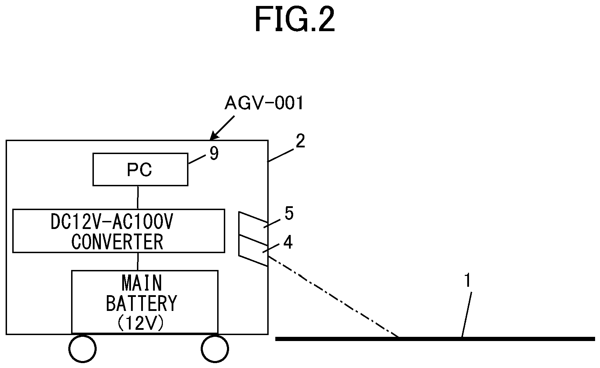

The autonomous vehicle AGV-001 as a towing vehicle is shown in FIG. 2. It automatically drives along the black vinyl tape 1 as an example of line marking on a yellow-green floor surface. A vehicle body includes a battery box containing a rechargeable battery to supply power to an electric motor, a camera 4 placed at angle of 35 degrees between a visual center line and the floor surface to capture the image of a floor surface ahead of the vehicle, an illuminator 5 with a fluorescent lamp to illuminate the position at which the visual center line of the camera 4 intersects with the floor surface, and a DC-AC converter and an on-vehicle PC 9 as a drive controller.

The camera 4 includes a USB camera and a polarization lens. The polarization lens is mounted on the lens of the USB camera to block reflected light from the floor surface and black vinyl tape 1 and prevent the occurrence of halation or highlight in a captured image. The camera 4 is connected with the USB port of the on-vehicle PC 9 which comprises a wireless LAN to wirelessly connect with access points AP connected with a server PC 31 as a personal computer on the ground. Thus, the camera 4 can wirelessly communicate with the server PC 31. In the present embodiment two access points AP1, AP2 are provided as shown in FIG. 1.

The on-vehicle PC 9 of the autonomous vehicle AGV-001 is configured to generate a drive control command to instruct the vehicle to drive along the black vinyl tape 1 and issues it to a microcomputer for controlling the driver of a drive system. It also detects the code signs from a captured image of the camera 4 and decodes driving instructions (actions) as right or left turn, driving straight, stop, associated with the code signs to generate and supply drive control commands to the microcomputer. Drive control commands are start, driving straight, at low speed or high speed, right steering, left steering, and stop. The microcomputer controls the speed of the electric motor to drive the wheels at a low speed or high speed in accordance with a speed command. Specifically, a motor driver controls the rotational speed of the electric motor so that a feedback speed coincides with a target speed instructed from the microcomputer. The feedback speed is the frequency (detected speed) of a pilot pulse generated by a rotary encoder.

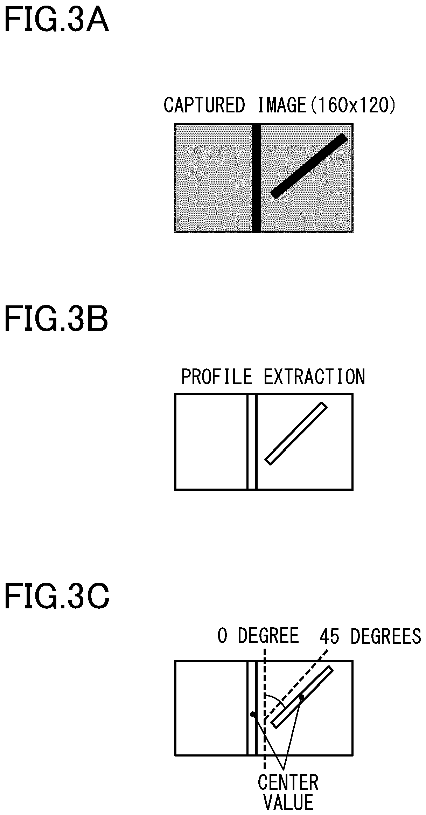

For example, the on-vehicle PC 9 obtains an image in width 160 of dots and height of 120 dots in FIG. 3A and the profile of the black vinyl tape in FIG. 3B from the camera 4, using an image processing library operating on the PC 9. Then, the size, center value (0-x-159, 0-y-119) and angle (-90 to +90 degrees) (FIG. 3C) of the profile comprised of 7 lines are calculated as follows.

$$\text{Center value x} = (\text{x maximal value} + \text{x minimal value} + 1)\,/2 = (86 + 69 + 1)/2 = 78$$

Center value y = (y maximal value + y minimal value + 1) /2 = (115 + 8 + 1)/2 = 62

atan ((y maximal value - y minimal value + 1) / (x maximal value - x minimal value

+1)) = atan ((115-8+1)/(86-69+1)) = 81 degrees

where atan is arc tangent of tan⁻¹, and the coordinates of the seven lines are (75,10), (69,59), (76,88), (72,106), (84,8), (86,85), (80,115). Since direct overhead is set to 0 degree, 90 - 81 = 9 degrees is obtained.

Further, the angle needs to be decided with horizontal orientations (left and right) taken into account so that it is defined to be leftward (- sign) when y is a maximal value when y < x holds where x is a minimal value and it is defined to be rightward (+ sign) when y is a maximal value when y > x holds where x is a minimal value. With the above 7 coordinates concerned, y = 59 when x is a maximal value and y = 85 when x is a minimal value so that the angle is -9 degrees. The size is set to a value obtained by the image processing library.

Assumed that the center value (78, 62), the angle of -9 degrees, and the size of 1,500 are calculated, an effective tape profile condition should be limited to 950 (19mm * 50mm) to 5,700 mm (19mm * 300mm). The tape profile less than 950 mm is not regarded as tape profile for the purpose of preventing erroneous detection of smudges on the floor surface.

Next, the steering of the autonomous vehicle is determined from the center value and angle as follows: If the x coordinate of the center value is $60 \leq x \leq 100$, the steering is determined as straight.

If it is x < 60, the steering is determined as steering left.

It is 100 < x, the steering is determined as steering right.

With the angle being less than 20 degrees, the steering is determined as straight.

With the angle being -20 degrees or more, the steering is determined as steering left.

With the angle being +20 degrees or more, the steering is determined as steering right.

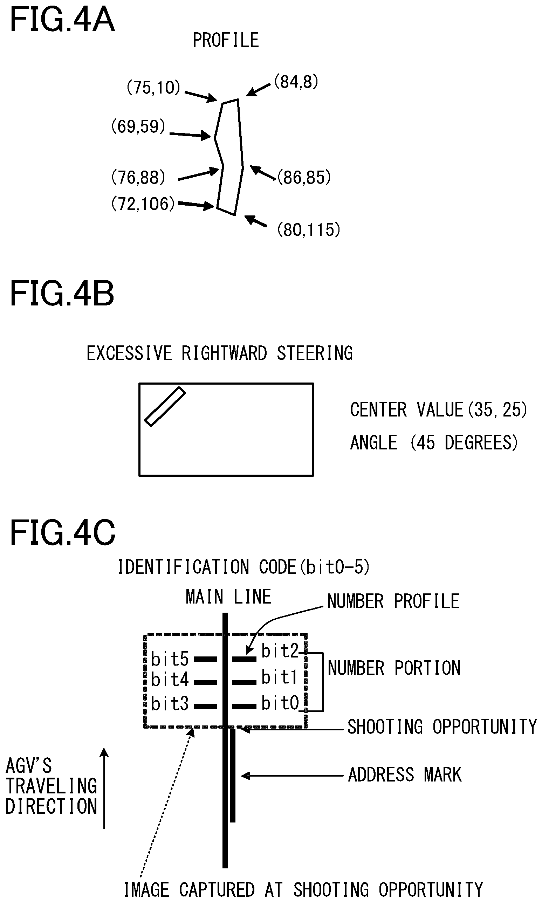

The steering orientation is determined from the correlation between the center value and angle. FIG. 4B shows an example of steering right excessively with the angle of 45 degrees and center value (35, 25). If the steering is determined only from the angle of 45 degrees, the vehicle continues to drive rightward, and the vinyl tape 1 disappears from the camera's view. Therefore, in this case the steering is changed to leftward according to the center value (35, 25) so that the tape profile comes at the center constantly. Thus, the vehicle is controlled in the same manner as a person drives a vehicle.

Next, detection of numbers represented by the code signs is described with reference to FIG. 4C. When detecting the profile of a line marking with an angular difference between profiles of less than 20 degrees and length 20 cm or more on the right side of a main line on the course layout or driving route, the on-vehicle PC 9 determines it as an address mark and waits for a shooting opportunity. The address mark indicates that there is an address ahead in the traveling direction. A shooting opportunity refers to timing at which two parallel lines (address mark) of the line marking become one line in an image, signifying that all the numbers or code signs are captured. Seven profiles of the main line and first to sixth number profiles are detected from the image captured at the shooting opportunity. The center value of the main line profile is M (x,y), and the center values of first to sixth number profiles at bit0 to bit5 are S1(x,y), S2 (x,y), S3(x,y), S4(x,y), S5(x,y), S6(x,y), respectively. The number profiles at bit0 to bit5 are arranged with an interval of 5 cm from the shooting opportunity and an actual size is 2 cm vertically by 10 cm horizontally, for example. In a number portion the presence or absence of a mark at each bit indicates 1 or 0 and is detected from the detected center values S1 to S6, referring to the following table.

|  | Position from main line M(x) | Y coordinate value of profile |
|---|---|---|
| bit0 | right | 1, if $0 \leq y \leq 39$ |
| bit1 | right | 1, if $40 \leq y \leq 79$ |
| bit2 | right | 1, if $80 \leq y \leq 119$ |
| bit3 | left | 1, if $0 \leq y \leq 39$ |
| bit4 | left | 1, if $40 \leq y \leq 79$ |
| bit5 | left | 1, if $80 \leq y \leq 119$ |

To prevent erroneous detection of a piece of trash or something on the floor for a number profile, the size can be limited to 100 or more and less than 200 and the angle can be limited to 60 degrees or more. In the example of FIG. 4C, the values of bit0 to bit5 are all 1, 3F in hex number, and 63 in decimal number.

The server PC 31 in FIG. 1 includes a shared folder (C:¥robot) generated with a shared file system by Windows® and containing automatic guided vehicle software (C:¥robot¥agv.exe), a drive plan (C:¥robot¥DRIVE_PLAN.csv), navigation software (C:¥robot¥navi.exe), and an event table (C:¥robot¥EVENT_NOTIFY.csv).

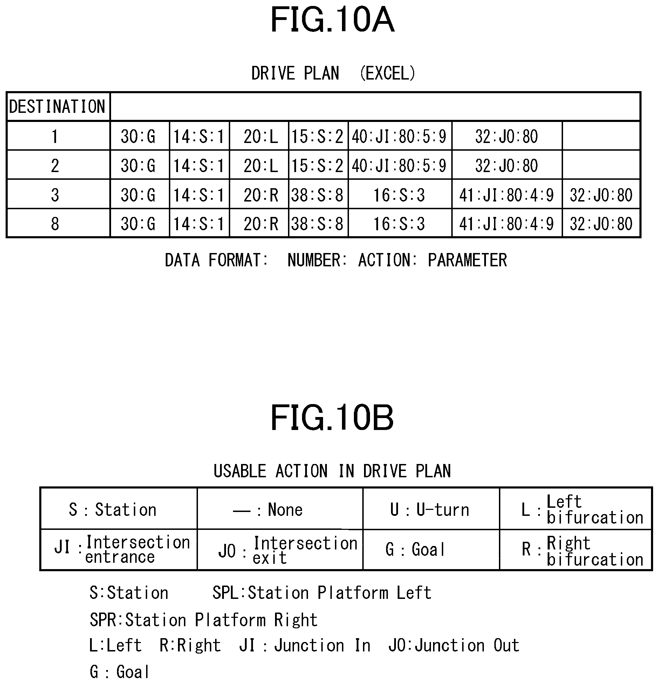

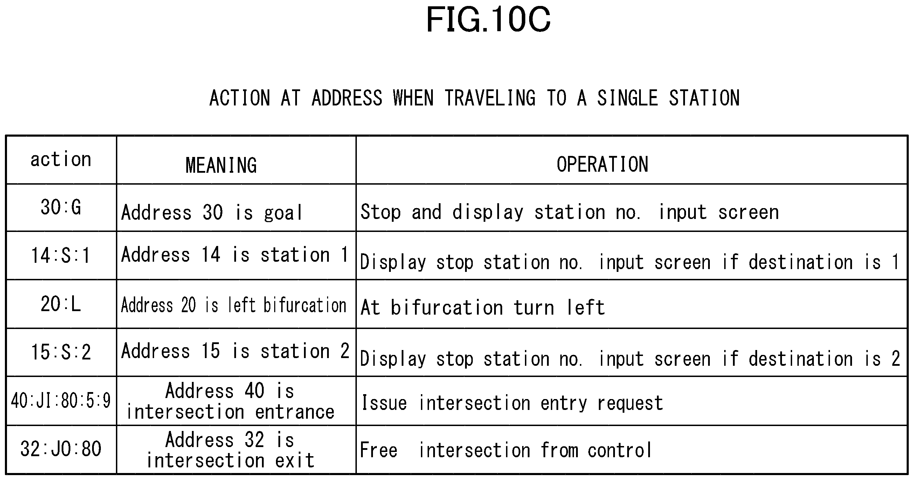

The automatic guided vehicle software incorporates AGV drive control, whereabouts recognition control, intersection management control, request process control for each PC, and drive plan management file (C:¥robot¥DRIVE_PLAN.csv). The navigation software (C:¥robot¥navi.exe) incorporates whereabouts display control, remote control instruction, request process control for each PC, and drive plan management file (C:¥robot¥DRIVE_PLAN.csv). The drive plan (C:¥robot¥DRIVE_PLAN.csv) and event table (C:¥robot¥EVENT_NOTIFY.csv) are books created by spreadsheet software, Excel®. FIG. 10A shows an example of the drive plan applied for the driving route in FIG. 1 and FIG. 13A shows an example of the event table.

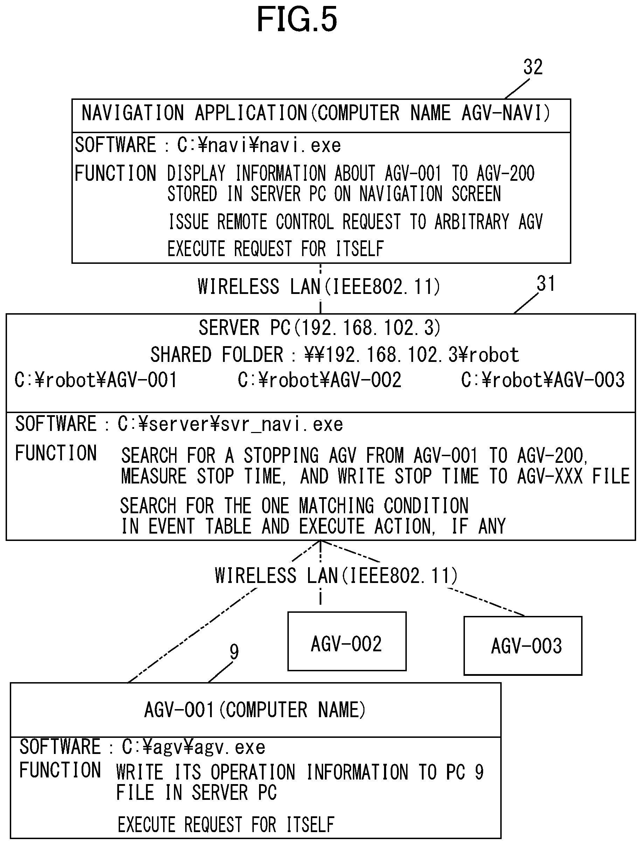

Now, the function of the on-vehicle PC 9 of the autonomous vehicle AGV is described. The server PC 31, autonomous vehicle AGV, and navigation PC 32 share the folder (C:¥robot) of the server PC 31 using file sharing by Windows® to form a system configuration as shown in FIG. 5. Network drive is allocated to the on-vehicle PC 9 so that the PC 9 is accessible to the folder (C:¥robot) in the server PC 31. For example, a checkmark is put in the box, "reconnect with drive: V folder: ¥¥192.168.102.3¥robot at log-on".

The autonomous vehicle is named uniquely such as the computer name of the on-vehicle PC 9. There are three autonomous vehicles AGV-001, AGV-002, AGV-003 driving on the course shown in FIG. 1. A description is made on from the power-on of the autonomous vehicle AGV-001 and input of a destination to completion of driving the entire course once.

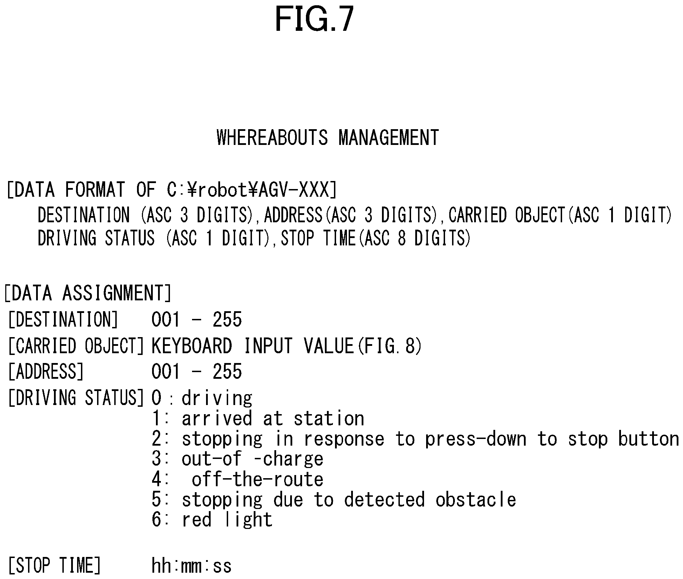

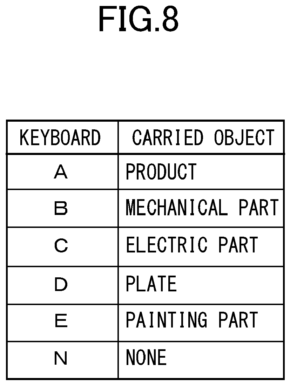

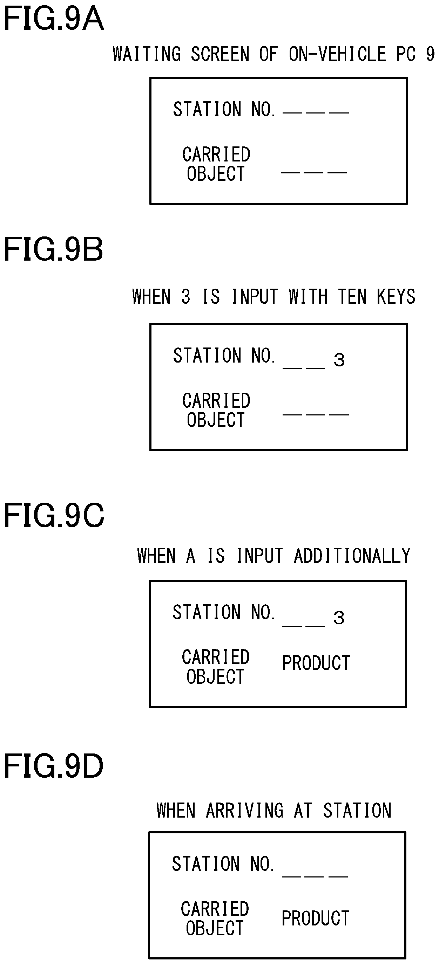

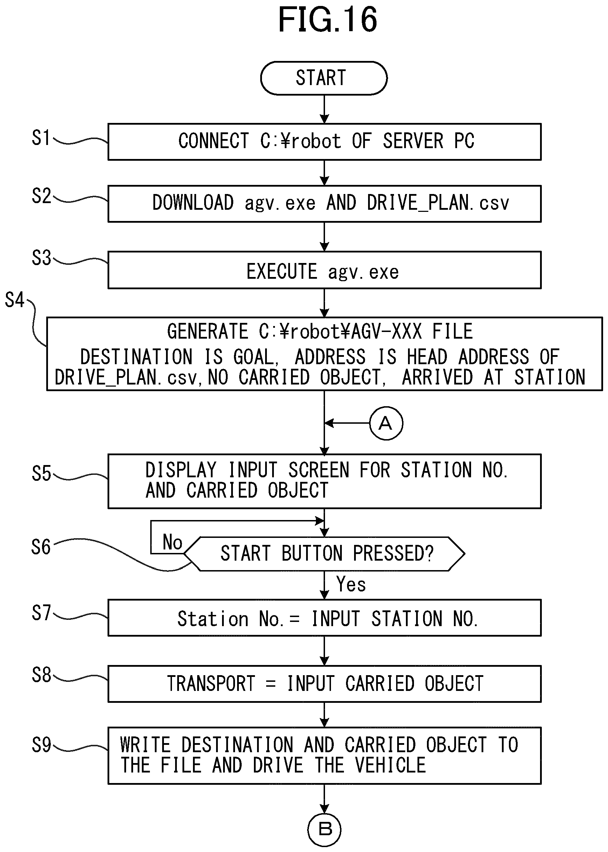

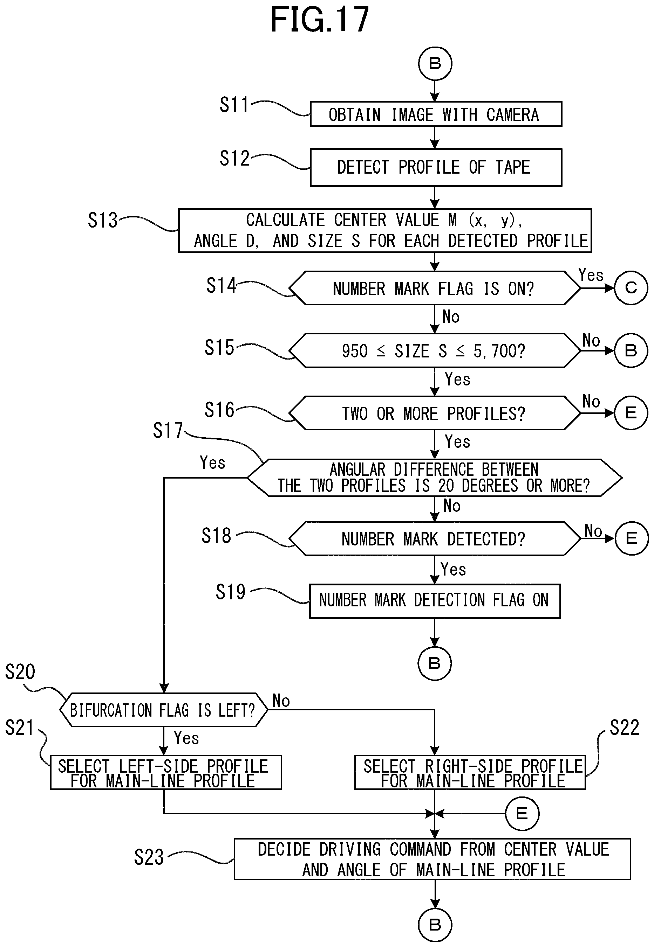

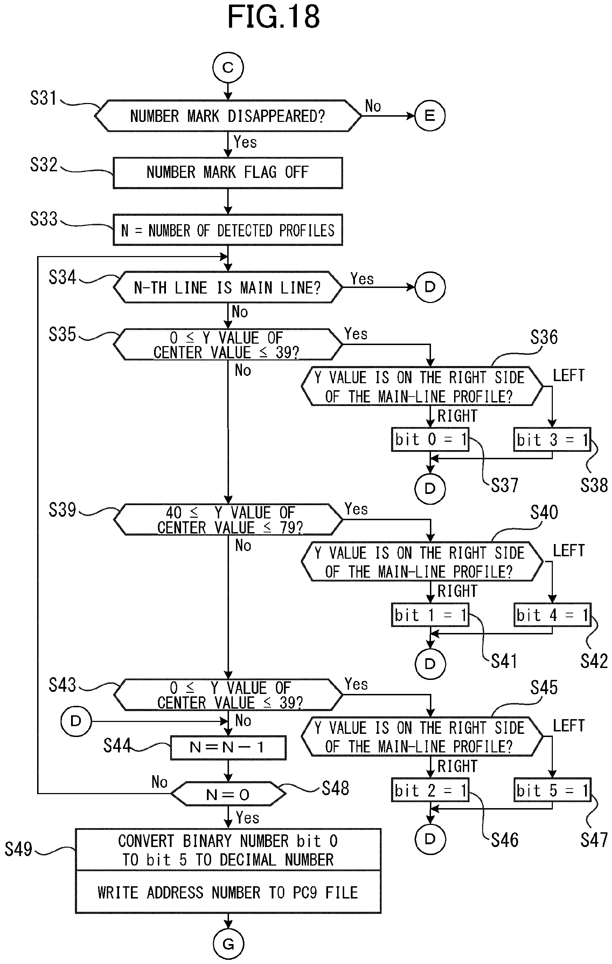

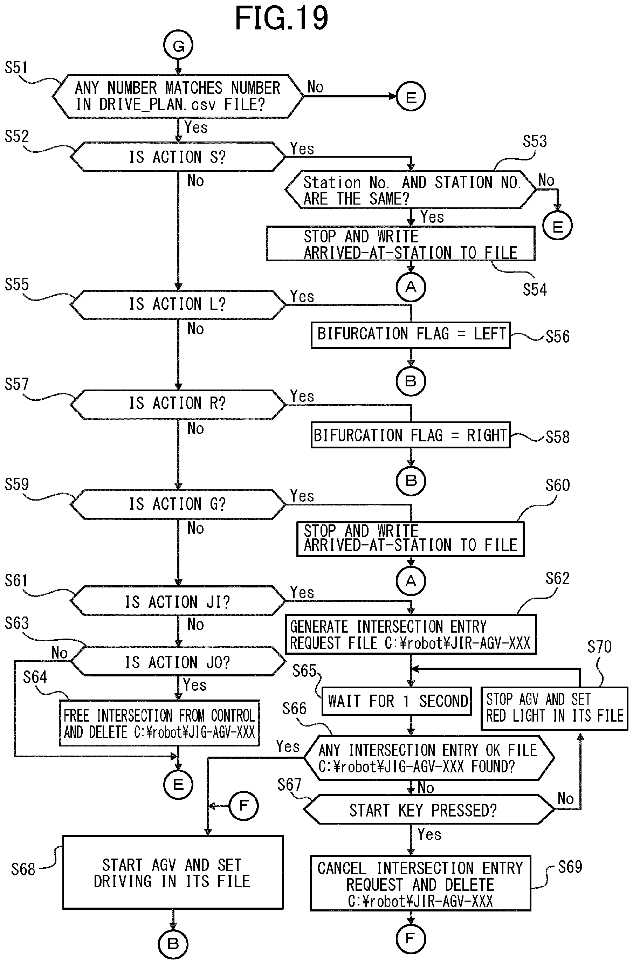

FIG. 16 to FIG. 19 are flowcharts for controlling the driving of the autonomous vehicle AGV-001 with the on-vehicle PC 9. Upon an operator's power-on of the autonomous vehicle AGV-001, the software, C:¥robot¥agv.exe and C:¥robot¥DRIVE_PLAN.csv is downloaded on the on-vehicle PC 9 from the server PC 31 and stored on a HDD in FIG. 16. Then, the on-vehicle PC 9 executes agv.exe. While wireless communication is disrupted, the agv.exe and DRIVE_PLAN.csv stored in the HDD are used. Then, presence or absence of the C:¥robot¥AGV-001 file is checked, and the file is generated if it is absent and driving information (status information) "G, 030, 0, 1" about AGV-001 is written to the AGV-001 file. The driving information is updated to "G, 030, 0, 1" signifying destination: GOAL, address: 30, carried object: none, and driving status: arrived at station. The contents of the driving information are shown in FIGs. 7, 8. At power-on the destination is set to GOAL and the address is set to a start point. The operator inputs a destination 3 and a carried object A (product in FIG. 8) with the keyboard of the on-vehicle PC 9 in FIGs. 9A, 9B.

In response to an operator's press-down to a start key, the on-vehicle PC 9 controls the autonomous vehicle AGV-001 to start driving and writes "003, 030, A, 0" to the AGV-001 file in FIGs. 7, 8. Then, the driving information is updated to destination: 3, address: 30, carried object: product, and driving status: driving. The drive plan for the destination 3 in FIG. 10A is used.

The on-vehicle PC 9 reads the first address 14 after the start point, searches for 14 in the drive plan and selects "14:S:1". It understands that the address 14 is station 1 and writes "003,014, A, 0" to the AGV-001 file in FIGs. 7 and 8. The driving information about the AGV-001 is updated to destination: 3, address: 14, carried object: product, driving status: driving. The on-vehicle PC 9 does not execute action at the address 14 and controls the AGV-001 to proceed to the destination 3.

Next, the on-vehicle PC 9 reads "20: R" at address 20, understands an instruction that turn right at bifurcation, and writes "003, 020, A, 0" to the AGV-001 file. The driving information about the AGV-001 is updated to destination: 3, address: 20, carried object: product, and driving status: driving. At bifurcation it selects the route with the center value on the right side to drive the AGV-001 thereon. Note that it recognizes a bifurcation when there are two profiles and an angular difference between the two is 20 degrees or more. The tape indicating the bifurcation needs to be laid not to overlap with the main line.

The on-vehicle PC 9 reads "38: S: 8" at address 38, understands that as station 8, and writes "003, 038, A, 0" to the AGV-001 file in FIGs. 7, 8. The AGV-001 drives forward to the destination 3 with no action executed at address 38.

The on-vehicle PC 9 then reads "16: S: 3" at address 16 and understands that as station 3. Arriving at destination 3, it executes station arrival action, that is, stops and displays a station number input screen (FIG. 9D) and writes "003, 016, A, 1" to the AGV-001 file in FIGs. 7, 8. The driving information about the autonomous vehicle AGV-001 is updated to destination: 3, address: 16, carried object: product, and driving status: arrived at station. Then, a worker unloads the carried object.

The worker presses an N key of the on-vehicle PC 9 to set "no carried object" in FIG. 8 and the on-vehicle PC 9 writes "003, 016 ,N, 1" to the AGV-001 file. Then, the operator presses a start key to start driving the autonomous vehicle AGV-001 without inputting a station number. Thereby, the on-vehicle PC 9 sets the destination to GOAL, displays it on the screen and writes "G, 016, N, 0" to the AGV-001 file in FIGs. 7, 8. The driving information about the AGV-001 is updated to destination: GOAL, address: 16, carried object: none, and driving status: driving.

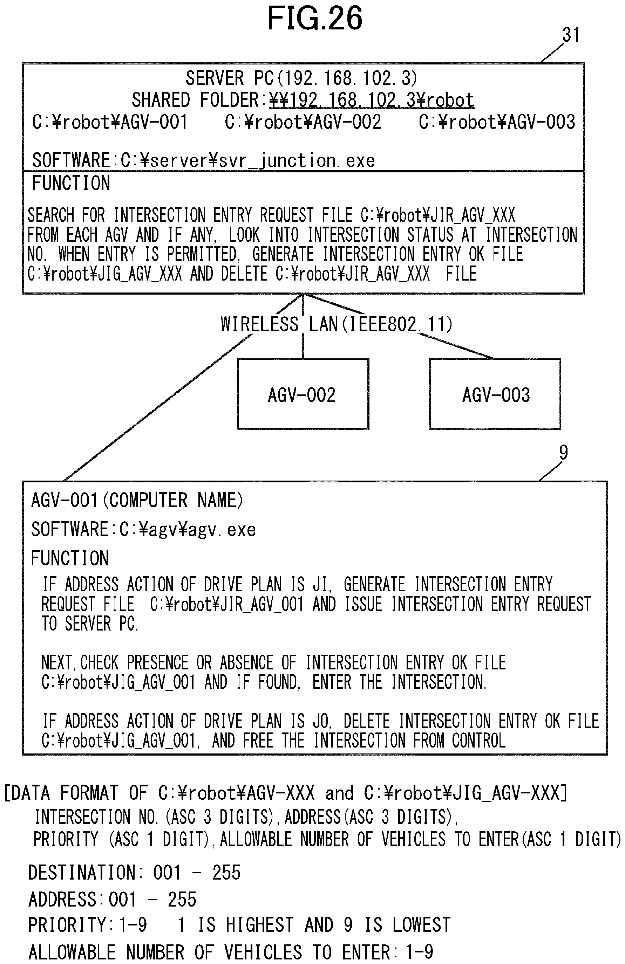

Next, the on-vehicle PC 9 reads "41: JI: 80: 4: 9" at address 41, understands that the vehicle has arrived at intersection entrance, generates an intersection entry request file JIR_AGV-001 to issue an intersection entry request to the server PC 31, and writes "080, 041, 4, 9" thereto, as shown in FIG. 26. Then, it checks whether or not there is an intersection entry OK file JIG_AGV-001 indicating entry permission to the intersection, and if none, stops the vehicle and writes "G, 041, N, 6" to the AGV-001 file (FIGs. 7, 8), and repeats the checking until it is found. If found, it writes "G, 041, N, 0" to the AGV-001 file, and allows the vehicle to proceed. If the vehicle is stopping, it restarts the vehicle.

Next, the on-vehicle PC 9 reads "32: JO: 80" at address 32, understands that the vehicle has arrived at intersection exit, and deletes the JIG_AGV-001 file. Then, it frees the intersection from control and writes "G, 032, N, 0" to the AGV-001 file in FIGs. 7, 8.

The on-vehicle PC 9 reads "30: G" at address 30, understands that the vehicle has arrived at GOAL, and stops the vehicle and displays the station number input screen (FIG. 9A). Then, it writes "G, 30, N, 1" to the AGV-001 file. Thereby, the driving information is updated to destination: GOAL, address: 30, carried object: none, and driving status: arrived at station.

Thus, the on-vehicle PC 9 of the autonomous vehicle generates its driving information as destination, driving position, carried object, driving status. Upon every update, the AGV-001 file is notified to the server PC 31 via LAN communication.

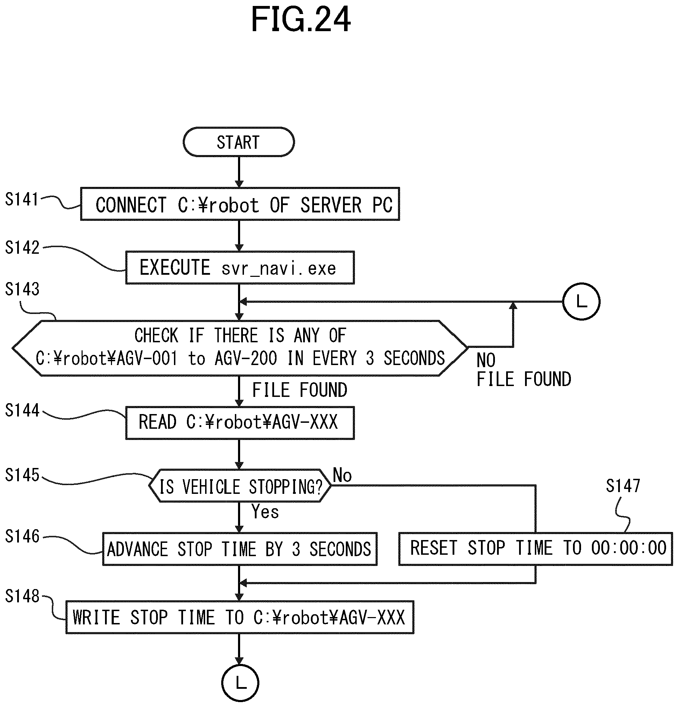

Next, the function of the server PC 31 is described. The server PC 31 periodically (for example, every 3 seconds) executes the following processing. FIG. 24 is a flowchart for the server PC's measuring stop time of the autonomous vehicle AGV.

First, to identify the vehicle AGV on the driving route, the server PC 31 searches for a valid AGV file by executing "open files AGV-001 to AGV-200". When successfully opening a file, it determines that the AGV is present on the driving route. In the present embodiment there are three valid autonomous vehicles AGV-001, AGV-002 and AGV-003 on the driving route and the contents of their files are assumed to be "G, 030, A, 1", "001, 014, N, 0", and "G, 032, C, 0", respectively.

It determines that the vehicle is stopping when the driving status is not-driving, that is, driving statuses 1 to 5, as shown in data assignment in FIG. 7. The AGV-001 is stopping and the server PC 31 starts a timer to start counting a stop time, and writes "G, 030, A, 1, 00:00:00" to the AGV-001 file. Time data is represented by hour: minute: second.

A valid AGV file is searched at every 3 seconds, for example. When finding the stopping AGV-001, the server PC 31 advances the timer by 3 seconds and writes "G, 030, A, 1, 00:00:03" to the AGV-001 file.

The server PC 31 repeats the above processing until the AGV-001 starts driving and measures the stop time in every 3 seconds from 00:00:00 to 99:99:99. That is, measured data is updated in every 3 seconds. When the AGV-001 starts driving, the stop time is reset to 00:00:00 and "G, 030, A, 0, 00:00:00" is written to the AGV-001 file.

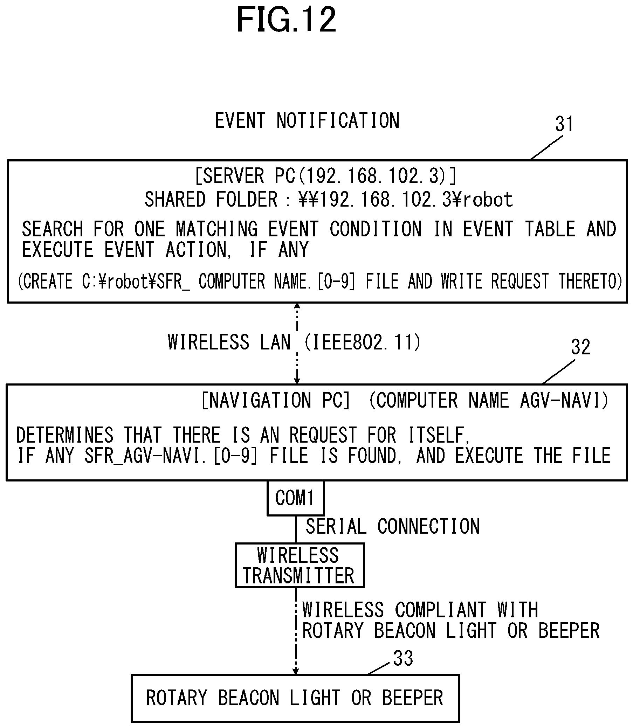

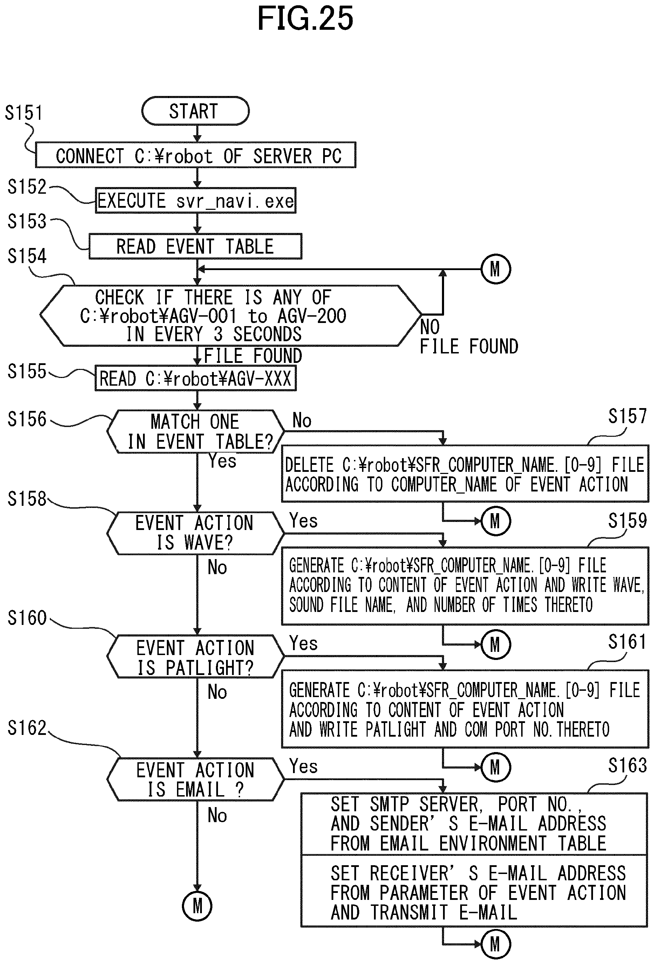

Next, the event notification processing of the server PC 31 is described with reference to FIGs. 12 and 25. The server PC 31 periodically (for example, 3 seconds) executes the following processing.

First, to identify the vehicle AGV on the driving route, the server PC 31 searches for a valid AGV file by executing "open files AGV-001 to AGV-200". When successfully opening a file, it determines that the AGV is present on the driving route. The contents of the valid files of the vehicles AGV-001 to AGV-003 are assumed to be "002, 030, A, 0", "001, 014, N, 1" and "G, 032, C, 4", respectively.

The server PC 31 then searches for the one matching the event table in FIG. 13A. There are three requested conditions:

    1. Address is 20.
    2. Destination is 1 and address is 14, and AGV No. is 2 (AGV-002).
    3. Driving status is off-the-route.

From the driving information about the AGV-001 to AGV-003, the AGV-002 satisfies the second condition and the AGV-003 satisfies the third condition.

Regarding the second event condition, referring to the event table in FIG. 13A, the command in [ACTION] is COMPUTER_NAME so that the server PC 31 knows that the name of computer to be notified from the server PC 31 is AGV-NAVI. Specifically, it adds a prefix, "SFR" thereto and the file name requested for AGV-NAVI is SFR_AGV-NAVI. For the purpose of issuing 10 requests concurrently to the same PC, an actual required file name will be one of SFR_AGV-NAVI.[0-9], that is, SFR_AGV-NAVI.0 to SFR_AGV-NAVI.9. With no C:¥robot¥SFR_AGV-NAVI.0 file, the C:¥robot¥SFRAGV-NAVI.0 file will be a required file and generated.

The next command in [ACTION] is WAVE and the server PC 31 determines it as audio notification. That is, the items in [ACTION] below WAVE are written to the C:¥robot¥SFR_AGV-NAVI.0 file. The next command in [ACTION] is PATLIGHT, and it determines it as a rotary beacon light or beeper. That is, the items in [ACTION] below PATLIGHT are written to the C:¥robot¥SFR_AGV-NAVI.0 file and the contents of the C:¥robot¥SFR_AGV-NAVI.0 will be "WAVE,AUDIO_2.wav:5" line feed "PATLIGHT,COM1".

Thus, the SFR_computer.[0-9] files are generated under C:¥robot¥ and the request is written thereto so that the request can be issued from the server PC 31 to the COMPUTER listed in [ACTION]. Further, the timing at which the C:¥robot¥SFR_AGV-NAVI.0 is deleted when an event condition is no longer satisfied.

Next, regarding the third event condition, condition continuance time is set to 5 minutes and an event notification is performed if the vehicle is off the route for 5 minutes or more. The command in [ACTION] is EMAIL so that the server PC 31 sends an e-mail to two addresses, taroh@abc.co.jp and jiroh@abc.co.jp in FIG. 13A. From the EMAIL environment table (Excel®) in FIG. 13D, basic information necessary to transmit an e-mail, such as an SMTP server, an SMTP port No., and a sender's address are set. From the driving information about the AGV-003 an AGV No., destination, address, and driving status are set as an e-mail subject, and an e-mail including only the subject (for example, AGV-003, destination: GOAL, address: 32, off-the-route time: 5 minutes) is sent to the receiver's addresses, taroh@abc.co.jp and jiroh@abc.co.jp.

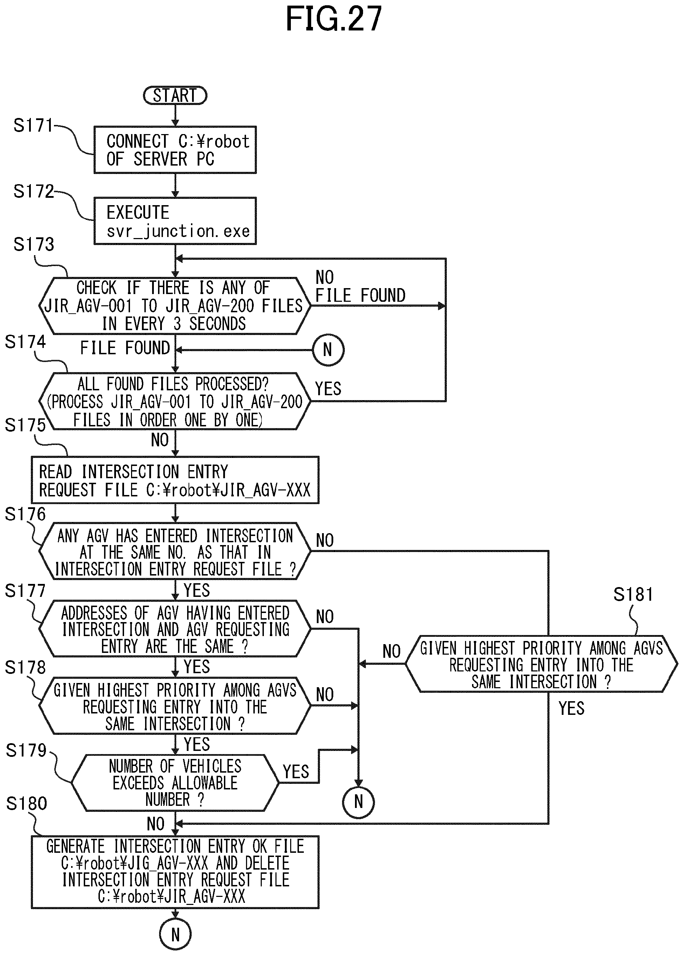

Now, the intersection control by the server PC 31 is described, referring to FIGs. 26, 27. The server PC 31 determines presence of an intersection entry request from the vehicle or vehicles AGV when the C:¥robot¥JIR_AGV-001 to JIR_AGV-200 files are successfully opened. Similarly, it determines that the vehicle or vehicles AGV is/are entering the intersection when the C:¥robot¥JIG_AGV-001 to JIG_AGV-200 files are successfully opened.

Specifically, it searches for the intersection entry request files JIR_AGV-001 to JIR_AGV-200 in order, and determines if entry permission should be given to found C:¥robot¥JIR_AGV-XXX files in series on the basis of the following two conditions. First condition:

1.1 There is no vehicle AGV entering the intersection of the same number as that in the intersection entry request file (no JIG_AGV-XXX at the same intersection number); and
1.2 The vehicle in question has highest priority among the vehicles AGV issuing an intersection entry request for the same intersection number.

Priority of concerning intersection entry request file ≤ Priority of another intersection entry request file

Second condition:

2.1 There is any vehicle AGV entering the intersection of the same number as that in the intersection entry request file (presence of JIG_AGV-XXX at the same intersection number);
2.2 The address of the intersection entry OK file JIG_AGV-XXX matches that of the intersection entry request file JIR_AGV-XXX (the same address means that two vehicles come from the same direction, therefore, the entry request is permitted);
2.3 The vehicle has highest priority among the vehicles AGV issuing an intersection entry request,
Priority of concerning intersection entry request file ≤ Priority of another intersection entry request file; and
2.4 The number of vehicles given the entry permission does not exceed an allowable number,

The allowable number of vehicles to enter in intersection entry request file > the number of vehicles having entered the intersection.

When either of the two conditions is found to be true, the server PC 31 generates a C:¥robot¥JIG_AGV-XXX file and allows the vehicle to enter the intersection.

For example, if there is no other vehicle AGV having entered the intersection, an intersection entry request file JIR_AGV-001 "080, 041, 4, 9" is generated when the vehicle AGV-001 has passed at address 41. At intersection No. 80 no vehicle AGV has entered and any of JIG_AGV-001 to JIG_AGV-200 files is not present so that the item 1.1 of the first condition is satisfied. Further, the vehicle AGV-001 is the only one requesting an intersection entry, therefore, it is given highest priority and the item 1.2 of the first condition is satisfied. Then, a JIG_AGV-001 "080, 041, 4, 9" file is generated to allow the vehicle AGV-001 to enter the intersection. Thereafter, the JIG_AGV-001 file is deleted.

Meanwhile, in a case where another vehicle AGV-002 has already entered the intersection No. 80 from address 40 from a different direction, a JIG_AGV-002 "080, 040, 5, 9" file is present. When the vehicle AGV-001 has passed the address 41, an intersection entry request file JIR_AGV-001 "080, 041, 4, 9" file is generated. Since the JIG_AGV-002 is present, the first condition is unsatisfied but the item 2-1 of the second condition is satisfied. The addresses of the JIG AGV-002 file and JIR AGV-001 file are different so that the item 2.2 of the second condition is unsatisfied. Further, priority of the JIR_AGV-001 file is 4 but no other vehicles AGV are issuing an intersection entry request, therefore, the item 2.3 of the second condition is satisfied. Then, the allowable number of vehicles to enter in the JIR_AGV-001 file is 9 and the number of JIG_AGV-XXX files is 1 so that the item 2.4 of the second condition is satisfied. Due to the unsatisfaction of the item 2-2, the second condition is not satisfied, a JIG_AGV-001 file is not generated for the vehicle AGV-001 and it is not allowed to enter the intersection. When the vehicle AGV-002 has passed address 32 and deletes the JIG-AGV-002 file, the first condition becomes true. A JIG AGV-001 "080, 0041, 4, 9" file is generated and the vehicle AGV-001 is now allowed to enter the intersection. Then, the JIR AGV-001 file is deleted.

Further, if another vehicle AGV-002 has already entered the intersection from the address 40 from the same direction, a JIG_AGV-002 "080, 040, 5, 9" file is present. When the vehicle AGV-001 has passed the address 40, an intersection entry request file JIR_AGV-001 "080, 040, 5, 9" is generated. Since the JIG_AGV-002 file is present, the first condition is unsatisfied but the item 2-1 of the second condition is satisfied. The addresses of the JIG AGV-002 file and JIR AGV-001 file are the same so that the item 2.2 of the second condition is satisfied. Further, priority of the JIR_AGV-001 file is 4 but no other vehicles AGV are issuing an intersection entry request, therefore, the item 2.3 of the second condition is satisfied. Then, the allowable number of vehicles to enter in the JIR AGV-001 file is 9 and the number of JIG AGV-XXX files is 1 so that the item 2.4 of the second condition is satisfied. Accordingly, the second condition is satisfied, a JIG_AGV-001 "080, 0040, 5, 9" file is generated for the vehicle AGV-001 to allow it to enter the intersection, following the vehicle AGV-002.

Now, the priority of the entry request file is described. Suppose a situation that two vehicles AGV-003 and AGV-001 arrive at the intersection entrance while the vehicle AGV-002 is entering the intersection. The vehicle AGV-002 has already entered the intersection from the address 40 so that the JIG_AGV-002 "080, 040, 5, 9" file is present. Then, when another vehicle AGV-003 has passed address 41, an intersection entry request file JIR_AGV-003 "080, 041, 4, 9" is generated. Another vehicle AGV-001 has passed the address 40 next, and another intersection entry request file JIR_AGV-001 "080, 040, 5, 9" is generated.

Regarding the JIR_AGV-003 "080, 041, 4, 9" file of the vehicle AGV-003, the first condition is unsatisfied but the item 2.1 of the second condition is satisfied because of the presence of the JIG_AGV-002 file. The item 2.2 of the second condition is unsatisfied since the addresses of the JIG AGV-002 and JIR AGV-003 files are different. The item 2.3 is satisfied since the priority of the JIR_AGV-003 is 4 and that of the vehicle AGV-001 issuing the entry request is 5. Then, the allowable number of vehicles to enter in the JIR AGV-001 file is 9 and the number of JIG AGV-XXX files is 1 so that the item 2.4 of the second condition is satisfied. Due to the unsatisfaction of the item 2-2, the second condition is not satisfied, and the vehicle AGV-003 is not allowed to enter the intersection.

Regarding the JIR_AGV-001 "080, 040, 5, 9" file of the vehicle AGV-001, the first condition is unsatisfied but the item 2.1 of the second condition is satisfied because of the presence of the JIG_AGV-002 file. The item 2.2 of the second condition is satisfied since the addresses of the JIG AGV-002 and JIR AGV-003 files are the same. The item 2.3 is unsatisfied since the priority of the JIR_AGV-001 is 5 and that of the vehicle AGV-003 issuing the entry request is 4. Then, the allowable number of vehicles to enter in the JIR_AGV-001 file is 9 and the number of JIG_AGV-XXX files is 1 so that the item 2.4 of the second condition is satisfied. Due to the unsatisfaction of the item 2-3, the second condition is not satisfied, and a JIG_AGV-001 file is not generated for the vehicle AGV-001 not to allow it to enter the intersection.

Then, when the vehicle AGV-002 has passed address 32 and deleted the JIG_AGV-002 file. no JIG_AGV-XXX file is present anymore so that the item 1.1 of the first condition is satisfied. However, the highest priority is given to the vehicle AGV-003 so that the item 1.2 is not satisfied. Accordingly, the vehicle AGV-001 is not allowed to enter the intersection.

For the JIR_AGV-003 "080, 041, 4, 9" file of the AGV-003, no JIG_AGV-XXX file is present anymore so that the item 1.1 of the first condition is satisfied. The highest priority is given to the AGV-003 so that the item 1.2 is satisfied. Since the first condition is satisfied, a JIG_AGV-003 "080, 0041, 4, 9" is generated and the vehicle AGV-003 is allowed to enter the intersection. The JIR_AGV-003 file is deleted.

Thus, it is made possible to give priority to the vehicles AGV in each direction while waiting at the intersection entrance, coming from different directions.

Next, the allowable number of vehicles to enter the intersection is described. For example, regarding the destinations 3 and 8 of the drive plan, action at address 41 is defined to be 41: JI: 80: 4: 1. Assumed that the vehicle AGV-001 has already entered the intersection from the address 41 and a JIG_AGV-001 "080, 041, 4, 1" is present. Then, the vehicle AGV-002 has passed the address 41, and an intersection entry request file JIR AGV-002 "080, 041, 4, 1" is generated. For the vehicle AGV-002, the item 2-1 of the second condition is satisfied since the JIG_AGV-001 file is present. The item 2.2 of the second condition is satisfied since the addresses of the JIG AGV-001 and JIR AGV-002 files are the same. The item 2.3 is satisfied since the priority of the JIR_AGV-002 is 4 and no other vehicles are issuing the entry request. Then, the allowable number of vehicles to enter in the JIR_AGV-002 file is 1 and the number of JIG_AGV-XXX files is 1, therefore, the item 2.4 of the second condition is unsatisfied. The vehicle AGV-002 is not allowed to enter the intersection. When, the vehicle AGV-001 has passed the address 32 and deleted the JIG_AGV-001 file, the first condition becomes satisfied. A JIG_AGV-002 "080, 0041, 4, 1" is generated to allow the vehicle AGV-002 to enter the intersection. Then, the JIR_AGV-002 file is deleted.

Thus, by managing the number of vehicles present in the intersection, it is made possible to realize synchronous control over plural vehicles AGV at the intersection such that when a single vehicle exits from the intersection, another vehicle enters the intersection. Because of this, at the intersection, not only the control over the vehicles traveling from different directions but also the synchronous control over the vehicles traveling from the same direction can be realized.

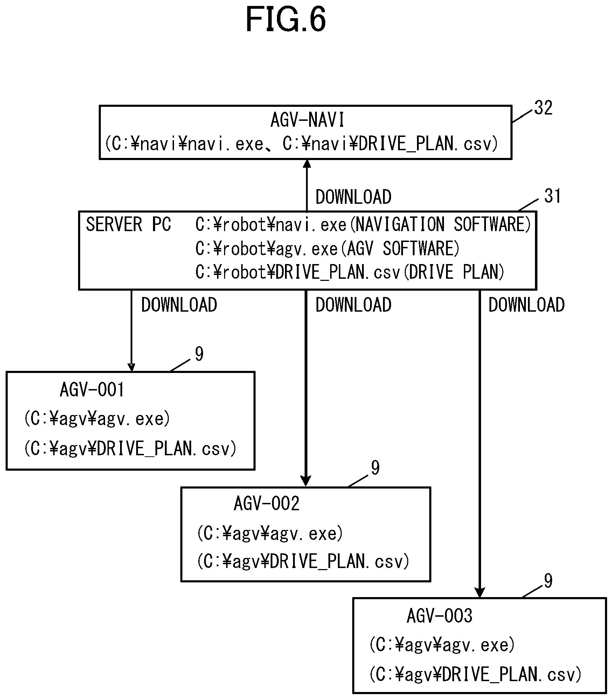

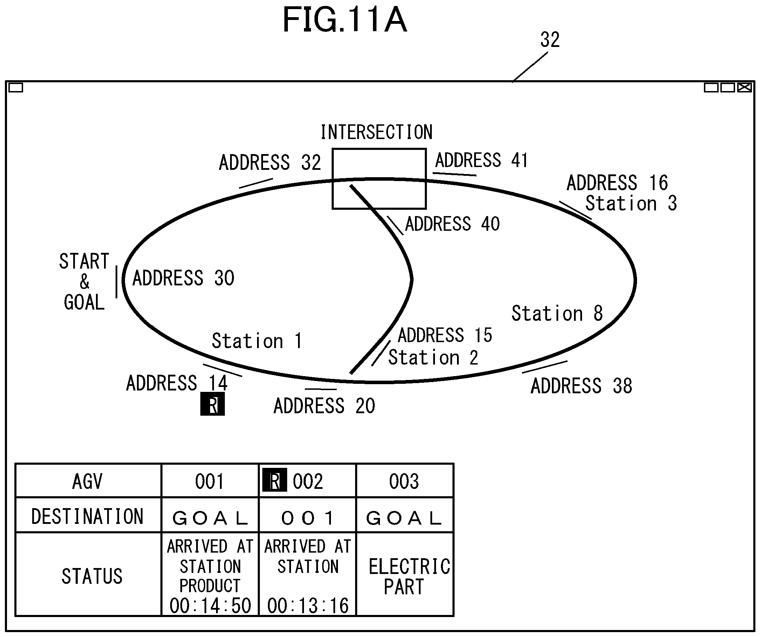

Now, the function of the navigation PC 32 is described referring to FIGs. 6, 11A, 11B and 21. The navigation PC 32 is operated by a navigation application operating thereon. The display size thereof is 1024 by 768. A course layout map in bmp size of 1024 by 500, (0, 0) to (1024, 500) is created by bmp file software such as Windows® paint and shown in FIG. 11A. In FIG. 11A the numbers of the autonomous vehicles AGV, destinations, and status are placed in an area of (0, 500) to (1024, 768). At boot-up of the navigation PC 32 or navigation, network drive is assigned to the navigation PC 32 as the system configuration in FIG. 5 so that the navigation PC can access to the C:¥robot file of the server PC 31.

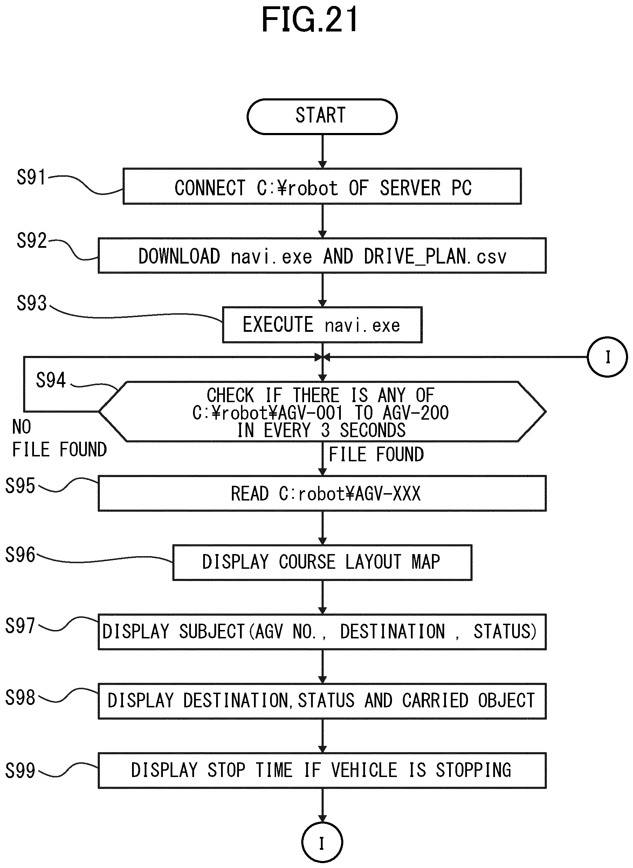

After the boot-up, the software, C:¥robot¥navi.exe and C:¥robot¥DRIVE_PLAN.csv is downloaded onto the navigation PC 32 from the server PC 31, stored in the HDD, and the navi.exe is executed, as shown in FIG. 6 and FIG. 21. During no wireless LAN communication the navi.exe and DRIVE_PLAN.csv stored in the navigation PC 32 are executed. Next, the course layout map, AGV names, destinations, and statuses are displayed on the screen of the navigation PC 32 in FIG. 11A.

Then, the following processing is executed in every 3 seconds to display the destination, driving position, carried object, and driving status on the navigation screen. To identify the vehicle AGV on the driving route, the server PC 31 searches for a valid AGV file by executing "open files AGV-001 to AGV-200". When successfully opening a file, it determines that the AGV is present on the driving route. In the present embodiment there are three valid autonomous vehicles AGV-001, AGV-002 and AGV-003 on the driving route and their file contents are read. Data are in format in FIG. 7 and data configuration is of destination (ASC: 3 digits), address (ASC: 3 digits), carried object (ASC: 1 digit), driving status (ASC: 3 digits), stop time (ASC: 8 digits). The data contents of the AGV-001, AGV-002, and AGV-003 files are assumed to be "G, 030, A, 1, 00:14:50", "001, 014, N, 1, 00:13:16", and "G, 032, C, 0, 00:00:00", respectively. Icons for the vehicles AGV-001 to AGV-003 are created.

First, Nos. 001 to 003 with icons are displayed on the AGV names column, and then their destinations are displayed on the destination column. The destination of the AGV-001 is "G" so that GOAL is displayed on the screen. Their carried objects are displayed on the carried object column. The carried object of the AGV-001 is "A" which is product from FIG. 8 so that "product" is displayed on the screen.

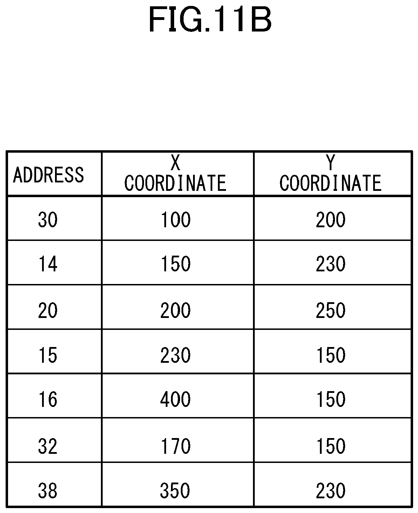

Next, the current positions of the AGV-001, AGV-002, AGV-003 are displayed on the destination column. The address of the AGV-001 is "030" and coordinate position is (100, 200) from FIG. 11B so that the icon is displayed on the coordinate (100, 200). The driving status of the AGV-001 is "1" so that "arrived at station" is displayed. The icons of the AGV-001 and AGV-002 not driving are lighted. Flashing the icon of the AGV-003 driving is visually recognizable.

The driving status can include error information such as out-of-charge. The on-vehicle PC 9 is supplied with power from the main battery via the DC-AC converter as shown in FIG. 2. While the charge amount of the main battery is sufficient, the on-vehicle PC 9 drives with AC power supply. While it is insufficient, the on-vehicle PC 9 drives with power from internal battery. Therefore, the remaining or no remaining of the main battery is checked by checking the power supply to the on-vehicle PC 9. In a temporary voltage decrease in the main battery due to loading of a heavy load, the PC 9 is supplied with power from the internal battery. The autonomous vehicle stops driving when no remaining amount of the main battery is determined since the power supply from the internal battery continues for a predetermined time or more. For example, if there is no power supply to the AGV-002 from the main battery, the data content of the AGV-002 file will be "001, 014, N, 3", and "out of charge" is displayed on the status column for AGV-002 in FIG. 11A.

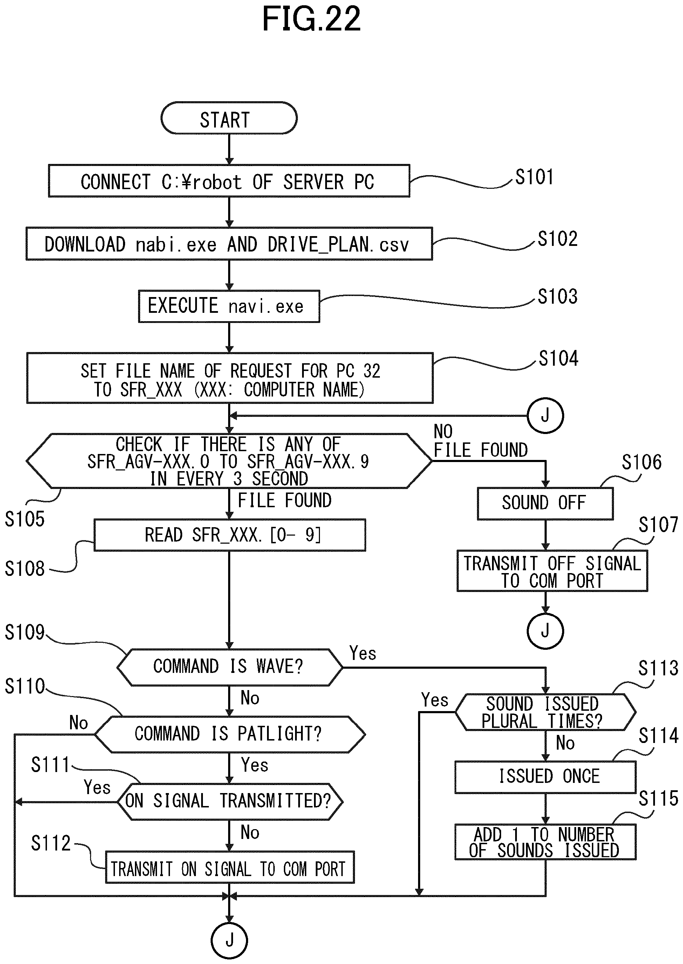

Now, the remote request reception processing of the navigation PC 32 is described with reference to FIGs. 12, 22. The navigation PC 32 periodically accesses the server PC 31 to check if there is SFR AGV-NAVI.[0-9] files and read the content of the file if there is any. Supposed that the content is "WAVE, AUDIO_2.wav:5 line feed "PATLIGHT,COM1", the command on the first line is WAVE, and the PC 32 identifies it as audio notification and issues sound five times in compliance with AUDIO_2.wav:5 as the parameter. The sound is turned off at timing at which the SFR_AGV-NAVI.[0-9] file disappears from the server PC 31. The command on the second line is PATLIGHT and the navigation PC 32 identifies it as execution of a rotary beacon light or beeper and transmits an ON signal to a COM1 according to COM1 as a parameter. A wireless transmitter connected with the COM1 transmits radio waves upon receipt of the ON signal to turn on the rotary beacon light or beeper. The rotary beacon light or beeper is turned off by transmitting an OFF signal to the COM1 from the navigation PC 32 when the SFR AGV-NAVI.[0-9] file disappears from the server PC 31. Since the data format of the file names and [ACTION] of the event table are both formed of a command and a parameter, for adding a new notifier, the file name can be freely expanded by defining a command and a parameter.

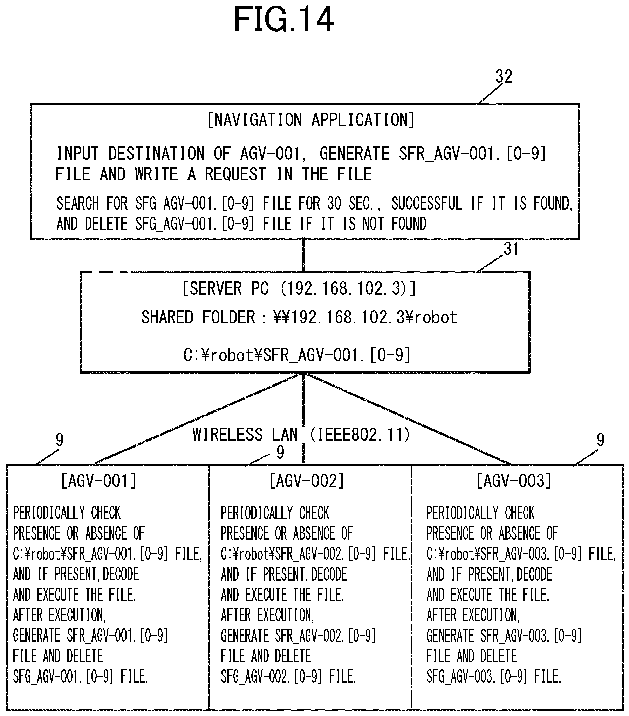

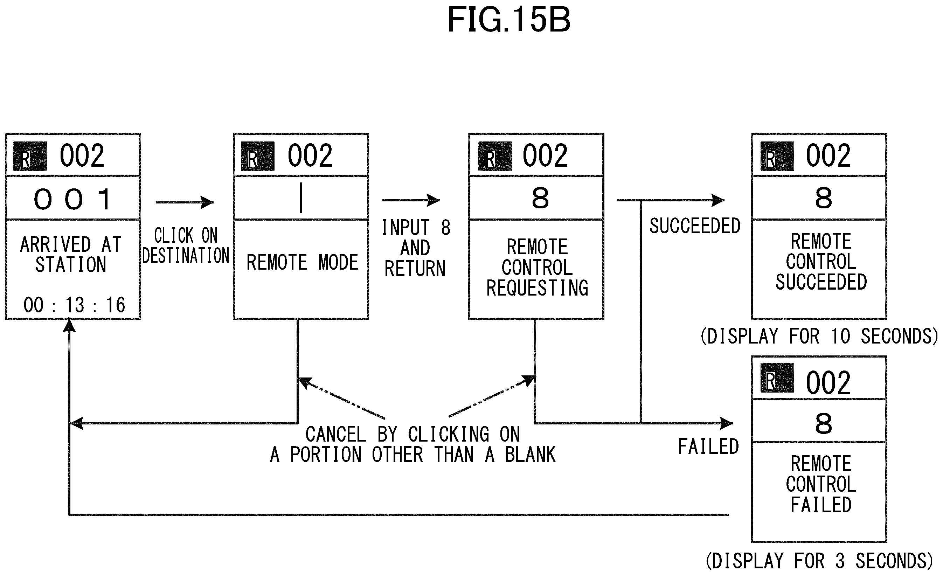

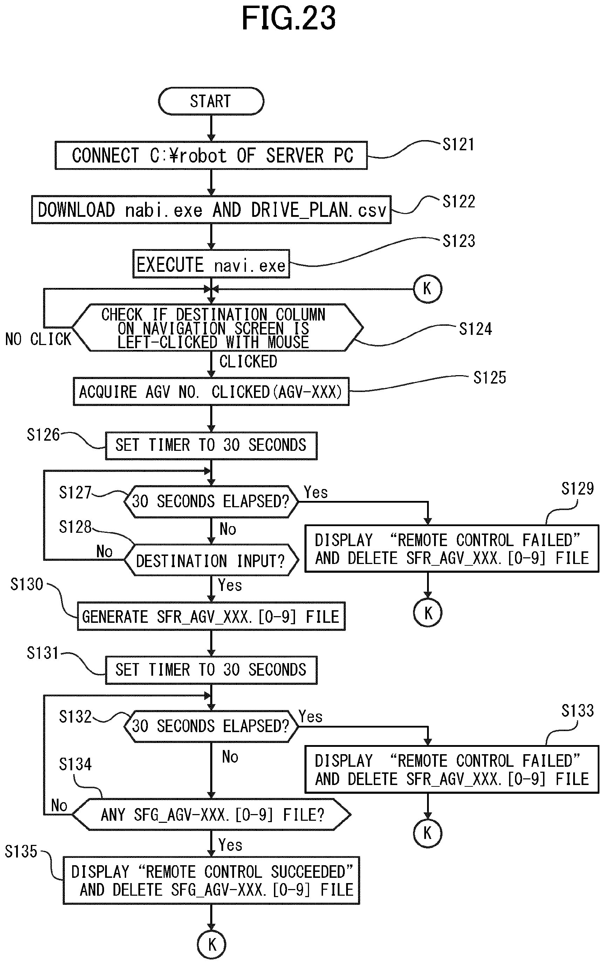

Next, the remote control over the autonomous vehicle from the navigation PC 32 is described referring to FIG. 14 and FIG. 23. The vehicle AGV-002 stopping at station 1 is remotely called out to station 8. First, checking of reception of remote request is described. The operator left-clicks on a blank destination field with a mouse in FIG. 15B to create a blank, input 8 with the ten keys of the navigation PC 32, and press a return key. The navigation PC 32 checks if there is destination 8 in the drive plan, DRIVE_PLAN.csv and if it is, creates a SFR_AGV-002.[0-9] file by adding SFR to the name AGV-002 to be remote-controlled. Specifically, a SFR AGV-002.0 file is created.

Then, it writes a command and a parameter, "EXE,DEST:8" to the server PC 31 to form a SFR AGV-002.0 file to issue a remote control request therein. The navigation PC 32 checks if there is a SFR_AGV-002.0 for 30 seconds as following the flowchart in FIG. 23 to confirm the reception of the request. Upon finding the file, it determines that the request has been successfully received and displays a message "remote control succeeded". If a SFG AGV-002.0 file is not found for 30 seconds, it determines that the request has not been successfully received, displays a message "remote control failed" and deletes the SFR AGV-002.0 file.

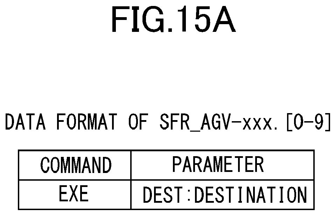

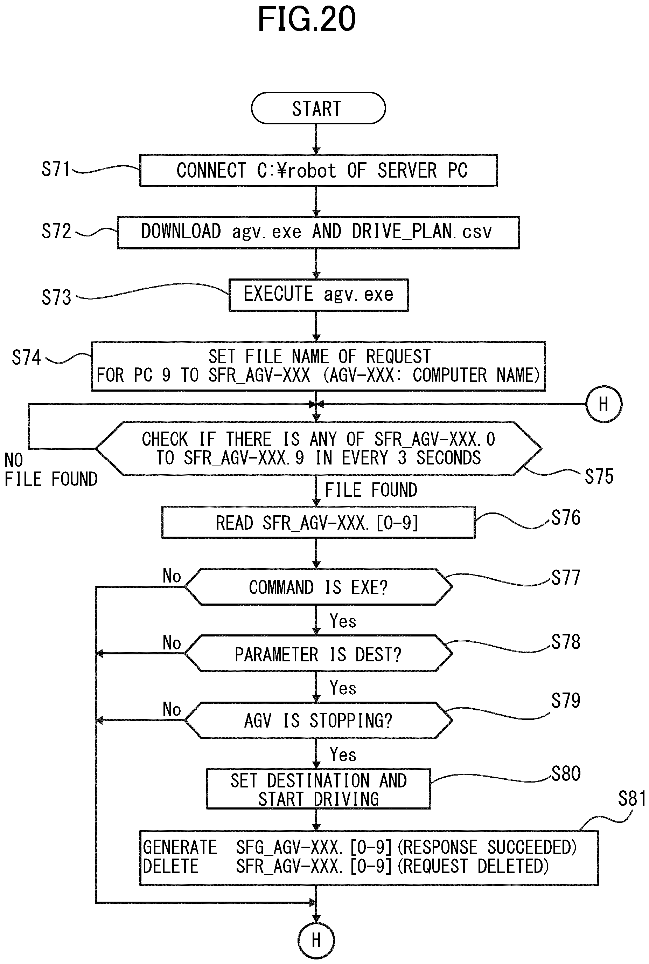

Next, the remote control request reception of the autonomous vehicle in FIG. 20 is described. The autonomous vehicle AGV-002 periodically accesses the server PC 31 to check if there is any of SFR_AGV-002.[0-9] files and read it ("EXE,DEST:8") if there is one. The command is EXE and the AGV-002 recognizes it as an execution command to start driving to destination 8 according to the parameter, DEST: 8. Specifically, the number 8 is displayed on the PC screen of the autonomous vehicle AGV-002 and the autonomous vehicle AGV-002 automatically starts driving by pseudo-press to the start key. Lastly, the SFR AGV-002.0 file is generated and deleted. As shown in FIG. 14, a large number of commands can be issued from the navigation PC 32 by the definitions of the commands and parameters as shown in FIG. 15A.

As described above, according to the present embodiment, the driving information is notified from the autonomous vehicle to the server PC so that the operator can see the driving information stored in the server PC on the display of the navigation PC. The operator can know the driving state of the autonomous vehicle using the navigation PC. For example, a manager or a load handler of the autonomous vehicle can check various information such as if a load has been delivered, where the vehicle is at present, to where it travels, if a station is overloaded, if the vehicle has arrived at station and remains left unattended, if there is an idling autonomous vehicle with no load, or if an error such as driving stop because of out-of-charge, obstacle, off-the-route occurs. Accordingly, it is possible to improve the operation efficiency of the autonomous vehicle. Further, the navigation PC operates by application operating on the PC so that the autonomous vehicle can be monitored from any personal computer on which the navigation application is installed and connected via wired LAN or wireless LAN in compliance with IEEE802.11. This automatic drive navigation system is free from positional restrictions.

Although the present invention has been described in terms of exemplary embodiments, it is not limited thereto. It should be appreciated that variations or modifications may be made in the present embodiments described by persons skilled in the art without departing from the scope of the present invention as defined by the following claims.

**Claims**

1. An automatic drive navigation system comprising:

   a navigation terminal (32) having a display;
   a server (31); and
   a plurality of autonomous vehicles (AGV); wherein:

      the navigation terminal (32), server (31) and the plurality of autonomous vehicles (AGV) are connected via a LAN;
      the navigation terminal (32) is adapted to issue, to the server (31), a drive request input by an operator via a LAN communication, for an autonomous vehicle (AGV) from the plurality of autonomous vehicles;
      the server is adapted to hold the drive request for each autonomous vehicle (AGV);
      each autonomous vehicle (AGV) is adapted to access the server periodically to respond to the drive request for itself and, upon receipt of the drive request, recognize a spot sign on a driving route and automatically operate a self-driving system in accordance with the spot sign;
      each autonomous vehicle (AGV) is further adapted to notify the server (31) of driving information about itself via the LAN communication;
      the server (31) is further adapted to hold the notified driving information; and
      the navigation terminal (32) is further adapted to access the server via the LAN communication to display the driving information of each autonomous vehicle (AGV) on the display.

2. The automatic drive navigation system according to claim 1, wherein:

   the server (31) includes an event table in which an event condition and an action to be executed when the event condition is satisfied are defined;
   the server (31) is adapted to execute the action in the event table when the defined event condition matches the driving information; and
   the navigation terminal (32) is adapted to access the server (31), and, when there is a request for the navigation terminal, respond to the request.

3. The automatic drive navigation system according to claim 1 or 2, wherein
   the navigation terminal (32) is adapted to display the driving information in rows for each of the autonomous vehicles (AGV) on the display.

4. The automatic drive navigation system according to any one of claims 1 to 3, wherein the LAN is compliant with TCP/IP or IEEE802.11.

5. The automatic drive navigation system according to any one of claims 1 to 4, wherein each autonomous vehicle (AGV) includes an input unit with which the operator inputs a drive request, to start driving in response to the drive request input by the operator.

6. The automatic drive navigation system according to any one of claims 1 to 5, wherein:

the server (31) is adapted to hold a drive plan which is a group of spot information indicating driving instructions at spots as a driving point and a bifurcation on the driving route of each autonomous vehicle (AGV); and each autonomous vehicle (AGV) is adapted to acquire the drive plan from the server (31) via the LAN communication, compare the recognized spot sign with the drive plan, and drive in accordance with a driving instruction attached to the spot sign.

7. The automatic drive navigation system according to any one of claims 1 to 6, wherein each autonomous vehicle (AGV) comprises:

a body having a self-driving system;
a camera (4) to capture an image of a line marking (1) on a floor surface ahead of the body in a driving direction;
an image detector to detect a position and a posture of the image of the line marking (1) captured by the camera (4) on the display;
a driver to operate the self-driving system to drive along the line marking (1) in accordance with the position and posture of the image;
a sign detector to recognize an image of a code sign representing a spot and added to the line marking (1) on the display to detect the spot represented by the code sign image; and
a drive controller to acquire the drive plan from the server (31) via a communication, compare the spot detected by the sign detector with the spot information in the drive plan, and control the driver in accordance with the driving instruction for the spot.

8. The automatic drive navigation system according to any one of claims 1 to 7, wherein:

the server (31) comprises
a computer to generate a drive plan on a driving route in accordance with a user's input and register the drive plan, the drive plan including a group of spot information attached to spots as a driving point and a bifurcation and containing driving instructions at the driving point and bifurcation in a round-trip route from a start point to a destination and from the destination to the start point of the driving route, the driving route on which a line marking (1) and code signs attached to the line marking (1) and indicating the driving point and bifurcation are provided, and
a ground communicator to selectively communicate with the autonomous vehicles (AGV) via a LAN; and
the autonomous vehicles (AGV) each comprise
a body having a self-driving system;
a camera (4) to capture an image of a line marking (1) on a floor surface ahead of the body in a driving direction;
an image detector to detect a position and a posture of the image of the line marking (1) captured by the camera (4) on the display;
a driver to operate the self-driving system to drive along the line marking (1) in accordance with the position and posture of the image;
a sign detector to recognize an image of a code sign representing a spot and added to the line marking (1) on the display to detect the spot represented by the code sign image;
an on-vehicle communicator (9) to wirelessly communicate with the server (31); and
a drive controller to acquire the drive plan from the server (31) via the on-vehicle communicator (9), compare the spot detected by the sign detector with the spot information in the drive plan, and control the driver in accordance with the driving instruction for the spot.

**Patentansprüche**

1. Automatisches Fahrnavigationssystem, umfassend:

   ein Navigationsterminal (32) mit einer Anzeige;
   einen Server (31); und
   eine Vielzahl von autonomen Fahrzeugen (AGV); wobei:

   das Navigationsterminal (32), der Server (31) und die Vielzahl von autonomen Fahrzeugen (AGV) über ein LAN verbunden sind;
   das Navigationsterminal (32) angepasst ist, um eine Fahranforderungseingabe durch einen Betreiber über eine LAN-Kommunikation für ein autonomes Fahrzeug (AGV) aus der Vielzahl von autonomen Fahrzeugen an den Server (31) zu senden;
   der Server angepasst ist, um die Fahranforderung für jedes autonome Fahrzeug (AGV) zu halten;
   jedes autonome Fahrzeug (AGV) angepasst ist, um regelmäßig auf den Server zuzugreifen, um auf die Fahranforderung für sich selbst zu reagieren und nach Empfang der Fahranforderung ein Ortsverkehrsschild auf einer Fahrstrecke zu erkennen und automatisch ein selbstfahrendes System in Übereinstimmung mit dem Ortsverkehrsschild zu betreiben;
   jedes autonome Fahrzeug (AGV) ferner angepasst ist, um dem Server (31) Fahrinformationen über sich selbst über die LAN-Kommunikation mitzuteilen;
   der Server (31) ferner angepasst ist, um die mitgeteilten Fahrinformationen zu halten; und
   das Navigationsterminal (32) ferner angepasst ist, um über die LAN-Kommunikation auf den Server zuzugreifen, um die Fahrinformationen jedes autonomen Fahrzeugs (AGV) auf der Anzeige anzuzeigen.

2. Automatisches Fahrnavigationssystem nach Anspruch 1, wobei:

   der Server (31) eine Ereignistabelle beinhaltet, in der eine Ereignisbedingung und eine auszuführende Handlung, wenn die Ereignisbedingung erfüllt ist, definiert sind;
   der Server (31) angepasst ist, um die Handlung in der Ereignistabelle auszuführen, wenn die definierte Ereignisbedingung mit den Fahrinformationen übereinstimmt; und
   das Navigationsterminal (32) angepasst ist, um auf den Server (31) zuzugreifen und, wenn eine Anforderung für das Navigationsterminal vorliegt, auf die Anforderung zu reagieren.

3. Automatisches Fahrnavigationssystem nach Anspruch 1 oder 2, wobei das Navigationsterminal (32) angepasst ist, um die Fahrinformationen in Zeilen für jedes der autonomen Fahrzeuge (AGV) auf der Anzeige anzuzeigen.

4. Automatisches Fahrnavigationssystem nach einem der Ansprüche 1 bis 3, wobei das LAN TCP/IP oder IEEE802.11 entspricht.

5. Automatisches Fahrnavigationssystem nach einem der Ansprüche 1 bis 4, wobei jedes autonome Fahrzeug (AGV) eine Eingabeeinheit beinhaltet, mit der der Betreiber eine Fahranforderung eingibt, um als Reaktion auf die Fahranforderungseingabe durch den Betreiber ein Fahren zu beginnen.

6. Automatisches Fahrnavigationssystem nach einem der Ansprüche 1 bis 5, wobei:

   der Server (31) angepasst ist, um eine Fahrtroute zu halten, die eine Gruppe von Ortsinformationen ist, die Fahranweisungen an Orten als einen Fahrpunkt und eine Gabelung auf der Fahrstrecke jedes autonomen Fahrzeugs (AGV) angeben; und
   jedes autonome Fahrzeug (AGV) angepasst ist, um die Fahrtroute vom Server (31) über die LAN-Kommunikation zu erhalten, das erkannte Ortsverkehrsschild mit der Fahrtroute zu vergleichen und in Übereinstimmung mit einer Fahranweisung, die am Ortsverkehrsschild angebracht ist, zu fahren.

7. Automatisches Fahrnavigationssystem nach einem der Ansprüche 1 bis 6, wobei jedes autonome Fahrzeug (AGV) Folgendes umfasst:

   einen Körper mit einem selbstfahrenden System;
   eine Kamera (4) zum Aufnehmen eines Bilds einer Linienmarkierung (1) auf einer Bodenfläche vor dem Körper in einer Fahrtrichtung;

einen Bilddetektor zum Erfassen einer Position und einer Lage des Bilds der Linienmarkierung (1), die durch die Kamera (4) aufgenommen ist, auf der Anzeige;

einen Fahrer zum Betreiben des selbstfahrenden Systems, um entlang der Linienmarkierung (1) in Übereinstimmung mit der Position und Lage des Bilds zu fahren;

einen Schilddetektor zum Erkennen eines Bilds eines Codeschilds, das einen Ort darstellt und zur Linienmarkierung (1) hinzugefügt ist, auf der Anzeige, um den Ort zu erfassen, der durch das Codeschildbild dargestellt ist; und

eine Fahrsteuerung zum Erhalten der Fahrtroute vom Server (31) über eine Kommunikation, zum Vergleichen des Orts, der durch den Schilddetektor erkannt ist, mit den Ortsinformationen in der Fahrtroute und zum Steuern des Fahrers in Übereinstimmung mit der Fahranweisung für den Ort.

**8.** Automatisches Fahrnavigationssystem nach einem der Ansprüche 1 bis 7, wobei:

der Server (31) Folgendes umfasst:

einen Computer zum Erzeugen einer Fahrtroute auf einer Fahrstrecke in Übereinstimmung mit einer Benutzereingabe und zum Registrieren der Fahrtroute, wobei die Fahrtroute eine Gruppe von Ortsinformationen beinhaltet, die an Orten als ein Fahrpunkt und eine Gabelung angebracht sind, und Fahranweisungen am Fahrpunkt und an der Gabelung auf einer Hin- und Rückstrecke von einem Startpunkt zu einem Ziel und vom Ziel zum Startpunkt der Fahrstrecke enthält, wobei auf der Fahrstrecke eine Linienmarkierung (1) und Codeschilder, die an der Linienmarkierung (1) angebracht sind und den Fahrpunkt und die Gabelung angeben, bereitgestellt sind, und

einen Bodenkommunikator zum selektiven Kommunizieren mit den autonomen Fahrzeugen (AGV) über ein LAN; und

die autonomen Fahrzeuge (AGV) jeweils Folgendes umfassen:

einen Körper mit einem selbstfahrenden System;

eine Kamera (4) zum Aufnehmen eines Bilds einer Linienmarkierung (1) auf einer Bodenfläche vor dem Körper in einer Fahrtrichtung;

einen Bilddetektor zum Erfassen einer Position und einer Lage des Bilds der Linienmarkierung (1), die durch die Kamera (4) aufgenommen ist, auf der Anzeige;

einen Fahrer zum Betreiben des selbstfahrenden Systems, um entlang der Linienmarkierung (1) in Übereinstimmung mit der Position und Lage des Bilds zu fahren;

einen Schilddetektor zum Erkennen eines Bilds eines Codeschilds, das einen Ort darstellt und zur Linienmarkierung (1) hinzugefügt ist, auf der Anzeige, um den Ort zu erfassen, der durch das Codeschildbild dargestellt ist;

einen am Fahrzeug befindlichen Kommunikator (9) zum drahtlosen Kommunizieren mit dem Server (31); und

eine Fahrsteuerung zum Erhalten der Fahrtroute vom Server (31) über den am Fahrzeug befindlichen Kommunikator (9), zum Vergleichen des Orts, der durch den Schilddetektor erkannt ist, mit den Ortsinformationen in der Fahrtroute und zum Steuern des Fahrers in Übereinstimmung mit der Fahranweisung für den Ort.

**Revendications**

**1.** Système de navigation de conduite automatique comprenant :

un terminal de navigation (32) comportant un affichage ;
un serveur (31) ; et
une pluralité de véhicules autonomes (AGV) ; dans laquelle :

le terminal de navigation (32), le serveur (31) et la pluralité de véhicules autonomes (AGV) sont connectés par le biais d'un réseau local (LAN) ;
le terminal de navigation (32) est conçu pour émettre, vers le serveur (31), une demande de conduite entrée par un opérateur par le biais d'une communication LAN, pour un véhicule autonome (AGV) depuis la pluralité de véhicules autonomes ;

le serveur est conçu pour maintenir la demande de conduite pour chaque véhicule autonome (AGV) ;

chaque véhicule autonome (AGV) est conçu pour accéder au serveur de manière périodique pour répondre à la demande de conduite pour lui-même et, lors de la réception de la demande de conduite, reconnaître un panneau de signalisation de lieu sur un itinéraire de conduite et automatiquement mettre en oeuvre un système de conduite autonome conformément au panneau de signalisation de lieu ;

chaque véhicule autonome (AGV) est en outre conçu pour indiquer au serveur (31) des informations de conduite sur lui-même par le biais de la communication LAN ;

le serveur (31) est en outre conçu pour détenir les informations de conduite indiquées ; et

le terminal de navigation (32) est en outre conçu pour accéder au serveur par le biais de la communication LAN pour afficher les informations de conduite de chaque véhicule autonome (AGV) sur l'affichage.

2.  Système de navigation de conduite automatique selon la revendication 1, dans lequel :

le serveur (31) comprend un tableau d'événements dans lequel une condition d'événement et une action devant être effectuée lorsque la condition d'événement est satisfaite sont définies ;

le serveur (31) est conçu pour effectuer l'action dans la table d'événements lorsque la condition d'événement définie correspond aux informations de conduite ; et

le terminal de navigation (32) est conçu pour accéder au serveur (31), et, lorsqu'il existe une demande pour un terminal de navigation, répondre à la demande.

3.  Système de navigation de conduite automatique selon la revendication 1 ou 2, dans lequel le terminal de navigation (32) est conçu pour afficher les informations de conduite dans des rangées pour chacun des véhicules autonomes (AGV) sur l'affichage.

4.  Système de navigation de conduite automatique selon l'une quelconque des revendications 1 à 3, dans lequel le LAN est conforme à TCP/IP ou IEEE802.11.

5.  Système navigation de conduite automatique selon l'une quelconque des revendications 1 à 4, dans lequel chaque véhicule autonome (AGV) comprend une unité d'entrée avec laquelle l'opérateur entre une demande de conduite, pour démarrer la conduite en réponse à la demande de conduite entrée par l'opérateur.

6.  Système navigation de conduite automatique selon l'une quelconque des revendications 1 à 5, dans lequel :

le serveur (31) est conçu pour maintenir un plan de conduite qui représente un groupe d'informations de lieu indiquant des instructions de conduite à des endroits en tant que point de conduite et bifurcation sur l'itinéraire de conduite de chaque véhicule autonome (AGV) ; et

chaque véhicule autonome (AGV) est conçu pour acquérir le plan de conduite à partir du serveur (31) par le biais de la communication LAN, comparer le panneau de signalisation de lieu reconnu au plan de conduite, et conduire conformément à une instruction de conduite attachée au panneau de signalisation de lieu.

7.  Système navigation de conduite automatique selon l'une quelconque des revendications 1 à 6, dans lequel chaque véhicule autonome (AGV) comprend :

un corps comportant un système de conduite automatique ;

un appareil photo (4) pour capturer une image d'un marquage linéaire (1) sur une surface au sol devant le corps dans une direction de conduite ;

un détecteur d'image pour détecter une position et une posture de l'image du marquage linéaire (1) capturées par l'appareil photo (4) sur l'affichage ;

un pilote pour faire fonctionner le système de conduite autonome pour conduire le long du marquage linéaire (1) conformément à la position et à la posture de l'image;

un détecteur de panneau pour reconnaître une image d'un panneau de code représentant un lieu et ajouté au marquage linéaire (1) sur l'affichage pour détecter le lieu représenté par l'image du panneau de code ; et

un dispositif de commande de conduite pour acquérir le plan de conduite à partir du serveur (31) par le biais d'une communication, comparer le lieu détecté par le détecteur de panneau avec les informations de lieu dans le plan de conduite, et commander le pilote conformément à l'instruction de conduite pour le lieu.

8.  Système navigation de conduite automatique selon l'une quelconque des revendications 1 à 7, dans lequel :

le serveur (31) comprend

un ordinateur pour générer un plan de conduite sur un itinéraire de conduite conformément à une entrée d'utilisateur et enregistrer le plan de conduite, le plan de conduite comprenant un groupe d'informations de lieux attachées aux lieux en tant que point de conduite et bifurcation et contenant des instructions de conduite au niveau du point de conduite et de la bifurcation dans un trajet aller-retour d'un point de démarrage à une destination et de la destination au point de démarrage de l'itinéraire de conduite, l'itinéraire de conduite sur lequel un marquage linéaire (1) et des panneaux de code attachés au marquage linéaire (1) et indiquant le point de conduite et la bifurcation sont fournis, et

un dispositif de communication au sol pour communiquer de manière sélective avec les véhicules autonomes (AGV) par le biais d'un LAN ; et

les véhicules autonomes (AGV) comprennent chacun

un corps comportant un système de conduite autonome ;

un appareil photo (4) pour capturer une image d'un marquage linéaire (1) sur une surface au sol devant le corps dans une direction de conduite ;

un détecteur d'image pour détecter une position et une posture de l'image du marquage linéaire (1) capturées par l'appareil photo (4) sur l'affichage ;

un pilote pour faire fonctionner le système de conduite autonome pour conduire le long du marquage linéaire (1) conformément à la position et à la posture de l'image ;

un détecteur de panneau pour reconnaître une image d'un panneau de code représentant un lieu et ajouté au marquage linéaire (1) sur l'affichage pour détecter le lieu représenté par l'image du panneau de code ;

un dispositif de communication embarqué (9) pour communiquer sans fil avec le serveur (31) ; et

un dispositif de commande de conduite pour acquérir le plan de conduite à partir du serveur (31) par le biais du dispositif de communication embarqué (9), comparer le lieu détecté par le détecteur de panneau avec les informations de lieu dans le plan de conduite, et commander le pilote conformément à l'instruction de conduite pour le lieu.

# FIG.1

WIRED LAN

SERVER PC 31 (IP ADDRESS : 192. 168. 102. 3)

32

NAVIGATION PC

WIRELESS
LAN

AP2

ADDRESS 32    INTERSECTION
(INTERSECTION       (No. 80)
EXIT)                              ADDRESS 41 (INTERSECTION ENTRANCE)

AGV-001                                            ADDRESS 16
                                                   (STATION 3)

1                                        ADDRESS 40
                          TRAVELING      (INTERSECTION
ADDRESS 30                DIRECTION        ENTRANCE)
START & GOAL
                                          ADDRESS 15
                                          (STATION 2)

ADDRESS 14                                        ADDRESS 38
(STATION 1)          ADDRESS 20                   (STATION 8)
                     (BIFURCATION)

AP1

# FIG.2

AGV-001

9

PC

2

DC12V-AC100V
CONVERTER

5

4

MAIN
BATTERY
(12V)

1

# FIG.3A

CAPTURED IMAGE(160x120)

# FIG.3B

PROFILE EXTRACTION

# FIG.3C

0 DEGREE    45 DEGREES

CENTER
VALUE

# FIG.4A

PROFILE

(75,10) → ← (84,8)

(69,59) →

(76,88) → ← (86,85)

(72,106) →

← (80,115)

# FIG.4B

EXCESSIVE RIGHTWARD STEERING

CENTER VALUE (35, 25)

ANGLE (45 DEGREES)

# FIG.4C

IDENTIFICATION CODE (bit0-5)

MAIN LINE ── NUMBER PROFILE

bit5 ── bit2

bit4 ── bit1 ── NUMBER PORTION

bit3 ── bit0

── SHOOTING OPPORTUNITY

AGV'S TRAVELING DIRECTION

── ADDRESS MARK

IMAGE CAPTURED AT SHOOTING OPPORTUNITY

# FIG.5

32

| NAVIGATION APPLICATION(COMPUTER NAME AGV-NAVI) |
|---|
| SOFTWARE : C:¥navi¥navi.exe |
| FUNCTION DISPLAY INFORMATION ABOUT AGV-001 TO AGV-200 STORED IN SERVER PC ON NAVIGATION SCREEN |
| ISSUE REMOTE CONTROL REQUEST TO ARBITRARY AGV |
| EXECUTE REQUEST FOR ITSELF |

WIRELESS LAN(IEEE802.11)   31

| SERVER PC(192.168.102.3) SHARED FOLDER : ¥¥192.168.102.3¥robot |
|---|
| C:¥robot¥AGV-001      C:¥robot¥AGV-002      C:¥robot¥AGV-003 |
| SOFTWARE : C:¥server¥svr_navi.exe |
| FUNCTION  SEARCH FOR A STOPPING AGV FROM AGV-001 TO AGV-200, MEASURE STOP TIME, AND WRITE STOP TIME TO AGV-XXX FILE |
| SEARCH FOR THE ONE MATCHING CONDITION IN EVENT TABLE AND EXECUTE ACTION, IF ANY |

WIRELESS LAN(IEEE802.11)

9

| AGV-002 |
|---|

| AGV-003 |
|---|

| AGV-001(COMPUTER NAME) |
|---|
| SOFTWARE : C:¥agv¥agv.exe |
| FUNCTION  WRITE ITS OPERATION INFORMATION TO PC 9 FILE IN SERVER PC |
| EXECUTE REQUEST FOR ITSELF |

# FIG.6

AGV-NAVI
(C:¥navi¥navi.exe、C:¥navi¥DRIVE_PLAN.csv) — 32

DOWNLOAD — 31

SERVER PC   C:¥robot¥navi.exe(NAVIGATION SOFTWARE)
C:¥robot¥agv.exe(AGV SOFTWARE)
C:¥robot¥DRIVE_PLAN.csv(DRIVE PLAN)

DOWNLOAD          DOWNLOAD          DOWNLOAD

AGV-001 — 9

(C:¥agv¥agv.exe)

(C:¥agv¥DRIVE_PLAN.csv)

AGV-002 — 9

(C:¥agv¥agv.exe)

(C:¥agv¥DRIVE_PLAN.csv)

AGV-003 — 9

(C:¥agv¥agv.exe)

(C:¥agv¥DRIVE_PLAN.csv)

# FIG.7

WHEREABOUTS MANAGEMENT

[DATA FORMAT OF C:¥robot¥AGV-XXX]
   DESTINATION (ASC 3 DIGITS),ADDRESS(ASC 3 DIGITS),CARRIED OBJECT(ASC 1 DIGIT)
   DRIVING STATUS (ASC 1 DIGIT),STOP TIME(ASC 8 DIGITS)


[DATA ASSIGNMENT]
[DESTINATION]    001 - 255
[CARRIED OBJECT] KEYBOARD INPUT VALUE(FIG.8)
[ADDRESS]        001 - 255
[DRIVING STATUS] 0 : driving
                 1: arrived at station
                 2: stopping in response to press-down to stop button
                 3: out-of -charge
                 4:  off-the-route
                 5: stopping due to detected obstacle
                 6: red light

[STOP TIME]      hh:mm:ss

# FIG.8

| KEYBOARD | CARRIED OBJECT |
|:---:|:---|
| A | PRODUCT |
| B | MECHANICAL PART |
| C | ELECTRIC PART |
| D | PLATE |
| E | PAINTING PART |
| N | NONE |

# FIG.9A

WAITING SCREEN OF ON-VEHICLE PC 9

STATION NO. ——— —

CARRIED
OBJECT ——— —

# FIG.9B

WHEN 3 IS INPUT WITH TEN KEYS

STATION NO. —— —— 3

CARRIED
OBJECT ——— —

# FIG.9C

WHEN A IS INPUT ADDITIONALLY

STATION NO. —— —— 3

CARRIED
OBJECT PRODUCT

# FIG.9D

WHEN ARRIVING AT STATION

STATION NO. —— —— —

CARRIED
OBJECT PRODUCT

# FIG.10A

DRIVE PLAN  (EXCEL)

| DESTINATION | | | | | | | |
|:---:|:---:|:---:|:---:|:---:|:---:|:---:|:---:|
| 1 | 30:G | 14:S:1 | 20:L | 15:S:2 | 40:JI:80:5:9 | 32:JO:80 | |
| 2 | 30:G | 14:S:1 | 20:L | 15:S:2 | 40:JI:80:5:9 | 32:JO:80 | |
| 3 | 30:G | 14:S:1 | 20:R | 38:S:8 | 16:S:3 | 41:JI:80:4:9 | 32:JO:80 |
| 8 | 30:G | 14:S:1 | 20:R | 38:S:8 | 16:S:3 | 41:JI:80:4:9 | 32:JO:80 |

DATA FORMAT:  NUMBER: ACTION: PARAMETER

# FIG.10B

USABLE ACTION IN DRIVE PLAN

| S : Station | — : None | U : U-turn | L : Left bifurcation |
|:---:|:---:|:---:|:---:|
| JI : Intersection entrance | JO : Intersection exit | G : Goal | R : Right bifurcation |

S:Station     SPL:Station Platform Left

SPR:Station Platform Right

L:Left  R:Right  JI : Junction In  JO:Junction Out

G : Goal

# FIG.10C

ACTION AT ADDRESS WHEN TRAVELING TO A SINGLE STATION

| action | MEANING | OPERATION |
|---|---|---|
| 30:G | Address 30 is goal | Stop and display station no. input screen |
| 14:S:1 | Address 14 is station 1 | Display stop station no. input screen if destination is 1 |
| 20:L | Address 20 is left bifurcation | At bifurcation turn left |
| 15:S:2 | Address 15 is station 2 | Display stop station no. input screen if destination is 2 |
| 40:JI:80:5:9 | Address 40 is intersection entrance | Issue intersection entry request |
| 32:JO:80 | Address 32 is intersection exit | Free intersection from control |

EP 2 677 384 B1

# FIG.11A

32

INTERSECTION

ADDRESS 32    ADDRESS 41

ADDRESS 40

ADDRESS 16
Station 3

START
&
GOAL    ADDRESS 30

Station 8

Station 1    ADDRESS 15
Station 2

ADDRESS 14    ADDRESS 38
R    ADDRESS 20

| AGV | 001 | R 002 | 003 |
|---|---|---|---|
| DESTINATION | ＧＯＡＬ | ００１ | ＧＯＡＬ |
| STATUS | ARRIVED AT STATION PRODUCT 00:14:50 | ARRIVED AT STATION 00:13:16 | ELECTRIC PART |

EP 2 677 384 B1

# FIG.11B

| ADDRESS | X COORDINATE | Y COORDINATE |
|---------|--------------|--------------|
| 30 | 100 | 200 |
| 14 | 150 | 230 |
| 20 | 200 | 250 |
| 15 | 230 | 150 |
| 16 | 400 | 150 |
| 32 | 170 | 150 |
| 38 | 350 | 230 |

# FIG.12

EVENT NOTIFICATION                                              31

[SERVER PC(192.168.102.3)]
SHARED FOLDER : ¥¥192.168.102.3¥robot

SEARCH FOR ONE MATCHING EVENT CONDITION IN EVENT TABLE AND
EXECUTE EVENT ACTION, IF ANY

(CREATE C:¥robot¥SFR_ COMPUTER NAME.[0-9] FILE AND WRITE REQUEST THERETO)

WIRELESS LAN (IEEE802.11)                                       32

[NAVIGATION PC]  (COMPUTER NAME AGV-NAVI)

DETERMINES THAT THERE IS AN REQUEST FOR ITSELF,
IF ANY SFR_AGV-NAVI.[0-9] FILE IS FOUND, AND EXECUTE THE FILE

COM1

SERIAL CONNECTION

WIRELESS
TRANSMITTER

WIRELESS COMPLIANT WITH
ROTARY BEACON LIGHT OR BEEPER

33

ROTARY BEACON LIGHT OR BEEPER

# FIG.13A

EVENT TABLE (EXCEL)

[COND]: EVENT CONDITION    [ACTION]: EVENT ACTION

| [COND] | | 20 | | | |
|---|---|---|---|---|---|
| [ACTION] | COMPUTER_NAME | AGV-NAVI | suzuki | tanaka | |
| [ACTION] | WAVE | AUDIO_1.wav:5 | | | |
| [COND] | 1 | 14 | | | 2 |
| [ACTION] | COMPUTER_NAME | AGV-NAVI | | | |
| [ACTION] | WAVE | AUDIO_2.wav:5 | | | |
| [ACTION] | PATLIGHT | COM1 | | | |
| [COND] | | | 4 | 5 | |
| [ACTION] | EMAIL | taroh@abc.co.jp | jiroh@abc.co.jp | | |

# FIG.13B

[COND] FORMAT

| | HIGH-ORDER CONDITION | | | LOW-ORDER CONDITION | |
|---|---|---|---|---|---|
| | 1 | 2 | 3 | 4 | 5 |
| COND | DESTINATION | ADDRESS | DRIVING STATUS | HIGH-ORDER CONDITION CONTINUED TIME | AGV NO. |

# FIG.13C

[ACTION] FORMAT

| COMMAND | PARAMETER |
|---|---|
| COMPUTER_NAME | COMPUTER NAME TO BE NOTIFIED OF EVENT (PLURAL NAMES DEFINABLE) |
| WAVE | AUDIO FILE NAME: NUMBER OF TIMES |
| PATLIGHT | COM? (COM PORT NO.) |
| EMAIL | RECEIVER'S MAIL ADDRESS (PLURAL RECEIVERS DEFINABLE) |

# FIG.13D

EMAIL ENVIRONMENT TABLE (EXCEL)

| [SMTP] | DOMAIN NAME OF SMTP SERVER |
|---|---|
| [PORT] | SMTP PORT NO. |
| [FROM] | SENDER'S MAIL ADDRESS |

# FIG.14

32

[NAVIGATION APPLICATION]

INPUT DESTINATION OF AGV-001, GENERATE SFR_AGV-001.[0-9]
FILE AND WRITE A REQUEST IN THE FILE

SEARCH FOR SFG_AGV-001.[0-9] FILE FOR 30 SEC., SUCCESSFUL IF IT IS FOUND,
AND DELETE SFG_AGV-001.[0-9] FILE IF IT IS NOT FOUND

31

[SERVER PC (192.168.102.3)]

SHARED FOLDER : ¥¥192.168.102.3¥robot

C:¥robot¥SFR_AGV-001.[0-9]

WIRELESS LAN (IEEE802.11)

9    9    9

| [AGV-001] | [AGV-002] | [AGV-003] |
|---|---|---|
| PERIODICALLY CHECK PRESENCE OR ABSENCE OF C:¥robot¥SFR_AGV-001.[0-9] FILE, AND IF PRESENT,DECODE AND EXECUTE THE FILE. AFTER EXECUTION, GENERATE SFR_AGV-001.[0-9] FILE AND DELETE SFG_AGV-001.[0-9] FILE. | PERIODICALLY CHECK PRESENCE OR ABSENCE OF C:¥robot¥SFR_AGV-002.[0-9] FILE, AND IF PRESENT,DECODE AND EXECUTE THE FILE. AFTER EXECUTION, GENERATE SFR_AGV-002.[0-9] FILE AND DELETE SFG_AGV-002.[0-9] FILE. | PERIODICALLY CHECK PRESENCE OR ABSENCE OF C:¥robot¥SFR_AGV-003.[0-9] FILE, AND IF PRESENT,DECODE AND EXECUTE THE FILE. AFTER EXECUTION, GENERATE SFR_AGV-003.[0-9] FILE AND DELETE SFG_AGV-003.[0-9] FILE. |

# FIG.15A

DATA FORMAT OF SFR_AGV-xxx.[0-9]

| COMMAND | PARAMETER |
|---------|-----------|
| EXE | DEST:DESTINATION |

# FIG.15B

| R 002 |
|---|
| O O 1 |
| ARRIVED AT STATION |
| 00 : 13 : 16 |

CLICK ON DESTINATION →

| R 002 |
|---|
| | |
| REMOTE MODE |

INPUT 8 AND RETURN →

| R 002 |
|---|
| 8 |
| REMOTE CONTROL REQUESTING |

SUCCEEDED →

| R 002 |
|---|
| 8 |
| REMOTE CONTROL SUCCEEDED |

(DISPLAY FOR 10 SECONDS)

CANCEL BY CLICKING ON
A PORTION OTHER THAN A BLANK

FAILED →

| R 002 |
|---|
| 8 |
| REMOTE CONTROL FAILED |

(DISPLAY FOR 3 SECONDS)

EP 2 677 384 B1

# FIG.16

START

S1 — CONNECT C:¥robot OF SERVER PC

S2 — DOWNLOAD agv.exe AND DRIVE_PLAN.csv

S3 — EXECUTE agv.exe

S4 — GENERATE C:¥robot¥AGV-XXX FILE
DESTINATION IS GOAL, ADDRESS IS HEAD ADDRESS OF
DRIVE_PLAN.csv, NO CARRIED OBJECT, ARRIVED AT STATION

(A)

S5 — DISPLAY INPUT SCREEN FOR STATION NO.
AND CARRIED OBJECT

S6 — No ⟨ START BUTTON PRESSED? ⟩

Yes

S7 — Station No.= INPUT STATION NO.

S8 — TRANSPORT = INPUT CARRIED OBJECT

S9 — WRITE DESTINATION AND CARRIED OBJECT TO
THE FILE AND DRIVE THE VEHICLE

(B)

# FIG.17

(B)

S11 — OBTAIN IMAGE WITH CAMERA

S12 — DETECT PROFILE OF TAPE

S13 — CALCULATE CENTER VALUE M (x, y),
ANGLE D, AND SIZE S FOR EACH DETECTED PROFILE

S14 — NUMBER MARK FLAG IS ON? —Yes→ (C)

No

S15 — 950 ≤ SIZE S ≤ 5,700? —No→ (B)

Yes

S16 — TWO OR MORE PROFILES? —No→ (E)

Yes

S17 — ANGULAR DIFFERENCE BETWEEN
THE TWO PROFILES IS 20 DEGREES OR MORE?

Yes

No

S18 — NUMBER MARK DETECTED? —No→ (E)

Yes

S19 — NUMBER MARK DETECTION FLAG ON

(B)

S20 — BIFURCATION FLAG IS LEFT? —No→

Yes

S21 — SELECT LEFT-SIDE PROFILE
FOR MAIN-LINE PROFILE

S22 — SELECT RIGHT-SIDE PROFILE
FOR MAIN-LINE PROFILE

(E)

S23 — DECIDE DRIVING COMMAND FROM CENTER VALUE
AND ANGLE OF MAIN-LINE PROFILE

(B)

# FIG.18

C

S31 — NUMBER MARK DISAPPEARED? — No → E

│ Yes

S32 — NUMBER MARK FLAG OFF

S33 — N = NUMBER OF DETECTED PROFILES

S34 — N-TH LINE IS MAIN LINE? — Yes → D

│ No

S35 — 0 ≤ Y VALUE OF CENTER VALUE ≤ 39? — Yes

│ No

S36 — Y VALUE IS ON THE RIGHT SIDE OF THE MAIN-LINE PROFILE? — LEFT

│ RIGHT

bit 0 = 1    bit 3 = 1

D    S37    S38

S39 — 40 ≤ Y VALUE OF CENTER VALUE ≤ 79? — Yes

│ No

S40 — Y VALUE IS ON THE RIGHT SIDE OF THE MAIN-LINE PROFILE? — LEFT

│ RIGHT

bit 1 = 1    bit 4 = 1

D    S41    S42

S43 — 0 ≤ Y VALUE OF CENTER VALUE ≤ 39? — Yes

D → No

S44 — N = N − 1

S45 — Y VALUE IS ON THE RIGHT SIDE OF THE MAIN-LINE PROFILE? — LEFT

│ RIGHT

bit 2 = 1    bit 5 = 1

D    S46    S47

No — N = 0 — S48

│ Yes

S49 — CONVERT BINARY NUMBER bit 0 TO bit 5 TO DECIMAL NUMBER

WRITE ADDRESS NUMBER TO PC9 FILE

G

# FIG.19

S51 ANY NUMBER MATCHES NUMBER IN DRIVE_PLAN.csv FILE? — No → E

Yes

S52 IS ACTION S? — Yes → S53 Station No. AND STATION NO. ARE THE SAME? — No → E

No ↓ Yes

STOP AND WRITE ARRIVED-AT-STATION TO FILE S54

A

S55 IS ACTION L? — Yes → BIFURCATION FLAG = LEFT S56

No ↓ B

S57 IS ACTION R? — Yes → BIFURCATION FLAG = RIGHT S58

No ↓ B

S59 IS ACTION G? — Yes → S60 STOP AND WRITE ARRIVED-AT-STATION TO FILE

No ↓ A

S61 IS ACTION JI? — Yes → S62 GENERATE INTERSECTION ENTRY REQUEST FILE C:¥robot¥JIR-AGV-XXX

No ↓

S63 No ← IS ACTION JO? → Yes

S64 FREE INTERSECTION FROM CONTROL AND DELETE C:¥robot¥JIG-AGV-XXX

S65 WAIT FOR 1 SECOND

S70 STOP AGV AND SET RED LIGHT IN ITS FILE

E

S66 Yes ← ANY INTERSECTION ENTRY OK FILE C:¥robot¥JIG-AGV-XXX FOUND?

F

No ↓

S67 START KEY PRESSED? — No

Yes ↓

S68 START AGV AND SET DRIVING IN ITS FILE

S69 CANCEL INTERSECTION ENTRY REQUEST AND DELETE C:¥robot¥JIR-AGV-XXX

B

F

# FIG.20

START

S71 — CONNECT C:¥robot OF SERVER PC

S72 — DOWNLOAD agv.exe AND DRIVE_PLAN.csv

S73 — EXECUTE agv.exe

S74 — SET FILE NAME OF REQUEST
FOR PC 9 TO SFR_AGV-XXX (AGV-XXX: COMPUTER NAME)

H

CHECK IF THERE IS ANY OF SFR_AGV-XXX.0
TO SFR_AGV-XXX.9 IN EVERY 3 SECONDS          S75

NO
FILE FOUND

FILE FOUND

READ SFR_AGV-XXX.[0-9]          S76

No    COMMAND IS EXE?          S77

Yes

No    PARAMETER IS DEST?          S78

Yes

No    AGV IS STOPPING?          S79

Yes

SET DESTINATION AND
START DRIVING          S80

S81

GENERATE  SFG_AGV-XXX.[0-9] (RESPONSE SUCCEEDED)
DELETE    SFR_AGV-XXX.[0-9] (REQUEST DELETED)

H

# FIG.21

```
          ┌─────────────┐
          │    START    │
          └─────────────┘
                 │
                 ▼
S91 ┌──────────────────────────────────────┐
    │    CONNECT C:¥robot OF SERVER PC      │
    └──────────────────────────────────────┘
                 │
                 ▼
S92 ┌──────────────────────────────────────┐
    │  DOWNLOAD navi.exe AND DRIVE_PLAN.csv │
    └──────────────────────────────────────┘
                 │
                 ▼
S93      ┌──────────────────────┐
         │   EXECUTE navi.exe   │
         └──────────────────────┘                          ⓘ
                 │
                 ▼
S94 ╱─────────────────────────────────────────╲
    ◁      CHECK IF THERE IS ANY OF             ▷
NO  ╲    C:¥robot¥AGV-001 TO AGV-200           ╱
FILE FOUND      IN EVERY 3 SECONDS
                 │ FILE FOUND
                 ▼
S95 ┌──────────────────────────────────────┐
    │       READ C:robot¥AGV-XXX           │
    └──────────────────────────────────────┘
                 │
                 ▼
S96    ┌──────────────────────────────┐
       │   DISPLAY COURSE LAYOUT MAP   │
       └──────────────────────────────┘
                 │
                 ▼
S97 ┌──────────────────────────────────────────────┐
    │ DISPLAY SUBJECT(AGV NO., DESTINATION, STATUS) │
    └──────────────────────────────────────────────┘
                 │
                 ▼
S98 ┌──────────────────────────────────────────────┐
    │ DISPLAY DESTINATION,STATUS AND CARRIED OBJECT │
    └──────────────────────────────────────────────┘
                 │
                 ▼
S99 ┌──────────────────────────────────────────────┐
    │ DISPLAY STOP TIME IF VEHICLE IS STOPPING      │
    └──────────────────────────────────────────────┘
                 │
                 ▼
                ⓘ
```

# FIG.22

```
                    ┌──────────┐
                    │  START   │
                    └──────────┘
                         │
        ┌────────────────────────────────────┐
        │ CONNECT C:¥robot OF SERVER PC      │ ──────── S101
        └────────────────────────────────────┘
                         │
        ┌────────────────────────────────────┐
        │ DOWNLOAD nabi.exe AND DRIVE_PLAN.csv│ ─────── S102
        └────────────────────────────────────┘
                         │
        ┌────────────────────────┐
        │ EXECUTE navi.exe       │ ──────────── S103
        └────────────────────────┘
                         │
        ┌────────────────────────────────────┐
        │ SET FILE NAME OF REQUEST FOR PC 32 │ ──────── S104
        │ TO SFR_XXX (XXX: COMPUTER NAME)    │
        └────────────────────────────────────┘
                         │                          (J)
```

CHECK IF THERE IS ANY OF SFR_AGV-XXX.0 TO SFR_AGV-XXX.9 IN EVERY 3 SECOND — S105

NO FILE FOUND

FILE FOUND

READ SFR_XXX.[0-9] — S108

SOUND OFF — S106

TRANSMIT OFF SIGNAL TO COM PORT — S107

(J)

COMMAND IS WAVE? — S109    Yes

No

COMMAND IS PATLIGHT? — S110    No

Yes

ON SIGNAL TRANSMITTED? — S111    Yes

No

TRANSMIT ON SIGNAL TO COM PORT — S112

SOUND ISSUED PLURAL TIMES? — S113    Yes

No

ISSUED ONCE — S114

ADD 1 TO NUMBER OF SOUNDS ISSUED — S115

(J)

# FIG.23

```
                    START

            CONNECT C:¥robot OF SERVER PC                S121

        DOWNLOAD nabi.exe AND DRIVE_PLAN.csv             S122

                EXECUTE navi.exe                         S123

                                                    (K)
            CHECK IF DESTINATION COLUMN
            ON NAVIGATION SCREEN IS                      S124
   NO CLICK  LEFT-CLICKED WITH MOUSE
                   CLICKED

        ACQUIRE AGV NO. CLICKED(AGV-XXX)                 S125

  S126        SET TIMER TO 30 SECONDS


  S127    30 SECONDS ELAPSED?   Yes                      S129

  S128              No
       No                                   DISPLAY  "REMOTE CONTROL FAILED"
        DESTINATION INPUT?                  AND DELETE SFR_AGV_XXX.[0-9] FILE

                   Yes                                   (K)
  S130
       GENERATE SFR_AGV_XXX.[0-9] FILE

  S131        SET TIMER TO 30 SECONDS


  S132    30 SECONDS ELAPSED?   Yes                      S133

  S134              No
       No                                   DISPLAY  "REMOTE CONTROL FAILED"
        ANY SFG_AGV-XXX.[0-9] FILE?         AND DELETE SFR_AGV_XXX.[0-9] FILE

                   Yes                                   (K)
  S135
     DISPLAY "REMOTE CONTROL SUCCEEDED"
     AND DELETE SFG_AGV-XXX.[0-9] FILE

                    (K)
```

# FIG.24

```
                      ┌─────────┐
                      │  START  │
                      └─────────┘
                           │
                           ▼
S141 ──┐  ┌──────────────────────────────────────┐
       └──│   CONNECT C:¥robot OF SERVER PC       │
          └──────────────────────────────────────┘
                           │
                           ▼
S142 ──┐      ┌──────────────────────────┐
       └──────│   EXECUTE svr_navi.exe   │
              └──────────────────────────┘
                           │
S143           │                                              ┌───┐
  ┐            ▼                                              │ L │
  └──┌─────────────────────────────────────────────────┐     └───┘
     │            CHECK IF THERE IS ANY OF              │       ▲
   ◄─┤ C:¥robot¥AGV-001 to AGV-200 IN EVERY 3 SECONDS   ├───────┘
     └─────────────────────────────────────────────────┘   NO
                    │      FILE FOUND               FILE FOUND
                    ▼
S144 ──┐    ┌──────────────────────────┐
       └────│   READ C:¥robot¥AGV-XXX  │
            └──────────────────────────┘
                    │
S145 ──┐            ▼                    No
       └──  ◄ IS VEHICLE STOPPING? ►────────────────────────┐      S147
                    │ Yes                                    │        ┐
                    ▼                                        ▼        │
S146 ──┐ ┌──────────────────────────────┐   ┌──────────────────────────────────┐
       └─│ ADVANCE STOP TIME BY 3 SECONDS│   │ RESET STOP TIME TO 00:00:00      │
         └──────────────────────────────┘   └──────────────────────────────────┘
                    │                                        │
                    ▼◄───────────────────────────────────────┘
S148 ──┐ ┌──────────────────────────────────────┐
       └─│ WRITE STOP TIME TO C:¥robot¥AGV-XXX   │
         └──────────────────────────────────────┘
                    │
                    ▼
                  ┌───┐
                  │ L │
                  └───┘
```

# FIG.25

S151 — START

CONNECT C:¥robot OF SERVER PC

S152 — EXECUTE svr_navi.exe

S153 — READ EVENT TABLE

S154 — CHECK IF THERE IS ANY OF C:¥robot¥AGV-001 to AGV-200 IN EVERY 3 SECONDS → NO FILE FOUND → M

↓FILE FOUND

S155 — READ C:¥robot¥AGV-XXX

S156 — MATCH ONE IN EVENT TABLE? → No → S157 DELETE C:¥robot¥SFR_COMPUTER_NAME.[0-9] FILE ACCORDING TO COMPUTER_NAME OF EVENT ACTION

Yes

S158 — EVENT ACTION IS WAVE? → Yes → M S159 GENERATE C:¥robot¥SFR_COMPUTER_NAME.[0-9] FILE ACCORDING TO CONTENT OF EVENT ACTION AND WRITE WAVE, SOUND FILE NAME, AND NUMBER OF TIMES THERETO

No

S160 — EVENT ACTION IS PATLIGHT? → Yes → M S161 GENERATE C:¥robot¥SFR_COMPUTER_NAME.[0-9] FILE ACCORDING TO CONTENT OF EVENT ACTION AND WRITE PATLIGHT AND COM PORT NO.THERETO

No

S162 — EVENT ACTION IS EMAIL ? → Yes → M S163 SET SMTP SERVER, PORT NO., AND SENDER' S E-MAIL ADDRESS FROM EMAIL ENVIRONMENT TABLE

SET RECEIVER' S E-MAIL ADDRESS FROM PARAMETER OF EVENT ACTION AND TRANSMIT E-MAIL

No → M

M

# FIG.26

31

```
SERVER PC(192.168.102.3)
SHARED FOLDER:¥¥192.168.102.3¥robot
C:¥robot¥AGV-001    C:¥robot¥AGV-002    C:¥robot¥AGV-003

SOFTWARE:C:¥server¥svr_junction.exe
```
```
FUNCTION

SEARCH FOR INTERSECTION ENTRY REQUEST FILE C:¥robot¥JIR_AGV_XXX
FROM EACH AGV AND IF ANY, LOOK INTO INTERSECTION STATUS AT INTERSECTION
NO. WHEN ENTRY IS PERMITTED, GENERATE INTERSECTION ENTRY OK FILE
C:¥robot¥JIG_AGV_XXX AND DELETE C:¥robot¥JIR_AGV_XXX  FILE
```

WIRELESS LAN(IEEE802.11)

```
AGV-002
```
```
AGV-003
```

9

```
AGV-001(COMPUTER NAME)

SOFTWARE:C:¥agv¥agv.exe

FUNCTION

  IF ADDRESS ACTION OF DRIVE PLAN IS JI, GENERATE INTERSECTION ENTRY
  REQUEST FILE  C:¥robot¥JIR_AGV_001 AND ISSUE INTERSECTION ENTRY REQUEST
  TO SERVER PC.

  NEXT,CHECK PRESENCE OR ABSENCE OF INTERSECTION ENTRY OK FILE
  C:¥robot¥JIG_AGV_001 AND IF FOUND, ENTER THE INTERSECTION.

  IF ADDRESS ACTION OF DRIVE PLAN IS JO, DELETE INTERSECTION ENTRY OK FILE
  C:¥robot¥JIG_AGV_001, AND FREE THE INTERSECTION FROM CONTROL
```

[DATA FORMAT OF C:¥robot¥AGV-XXX and C:¥robot¥JIG_AGV-XXX]
    INTERSECTION NO.(ASC 3 DIGITS),ADDRESS(ASC 3 DIGITS),
    PRIORITY (ASC 1 DIGIT),ALLOWABLE NUMBER OF VEHICLES TO ENTER(ASC 1 DIGIT)

DESTINATION: 001 - 255

ADDRESS:001 - 255

PRIORITY:1-9   1 IS HIGHEST AND 9 IS LOWEST

ALLOWABLE NUMBER OF VEHICLES TO ENTER: 1-9

# FIG.27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001202130 A
- JP 2002004115 A
- JP 3235264 B
- WO 2007041295 A
- JP 2009251922 A